# EUROPEAN PATENT APPLICATION

(11) **EP 4 629 696 A1**
(43) Date of publication of application: **08.10.2025**
(21) Application number: 24168827.4
(22) Date of filing: 05.04.2024
(51) Int. Cl.: H04W 36/08, H04W 72/044, H04W 36/00, H04W 36/30, H04W 72/04, H04W 72/231, H04W 74/0833

(54) **BEAM USAGE AFTER CELL SWITCH COMMAND**

(71) Applicant: Panasonic Intellectual Property Corporation of America, Torrance, CA 90504 (US)
(72) Inventor: KUANG, Quan, 63225 Langen (DE); SUZUKI, Hidetoshi, Osaka, 571-8501 (JP)
(74) Representative: Grünecker Patent- und Rechtsanwälte PartG mbB

(57) **Abstract**

The present disclosure relates to a communication device, a base station and respective methods for a communication device and a base station. For example, the communication device is a user equipment (UE) comprising a circuitry and a transceiver. The transceiver, in operation, (i) receives control signalling; (ii) transmits one or more transmissions of a random-access (RA) procedure; (iii) receives one or more transmissions of the RA procedure; and (iv) transmits (a) a first Physical Uplink Shared Channel (PUSCH) transmission, wherein the first PUSCH transmission is a first transmission among PUSCH transmissions that are after completion of the RA procedure and scheduled by an Uplink (UL) grant addressed to a Radio Network Temporary Identifier (RNTI) of the communication device, or (b) a first Physical Uplink Control Channel (PUCCH) transmission that acknowledges reception of a downlink (DL) transmission, wherein the first PUCCH transmission is a first transmission among PUCCH transmissions that are after completion of the RA procedure and carry an acknowledgment of reception. The circuitry, in operation, (i) obtains, from the control signalling: (a) a cell switch command indicating that a cell switch from a source cell to a target cell is to be performed by the communication device, and (b) an indication indicating a Transmission Configuration Indication (TCI) state; (ii) performs, in accordance with the cell switch command, the cell switch to the target cell; (iii) performs the RA procedure in the target cell; and (iv) determines that the indicated TCI state is to be used starting with or with completion of (a) the first PUSCH transmission, or (b) the first PUCCH transmission.

## Description

### BACKGROUND

### 1. Technical field

The present disclosure relates to transmission and reception of signals in communication systems, such as 3GPP communication systems. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE and NR, further improvements and options may facilitate efficient operation of the communication system as well as particular devices pertaining to the system.

### SUMMARY

One non-limiting and exemplary embodiment facilitates a communication device to select, after performing a RA-based cell switch to a target cell, an appropriate beam for communication with the target cell's base station (BS) while reducing the risk of mismatching beam usage (which happens when base station and communication device assume that different beams/TCI state are to be used). In particular, usage of a beam/TCI state indicated to the communication device together with the cell switch command can begin an appropriate time.

In an embodiment, the techniques disclosed here feature a communication device. The communication device comprises a transceiver and circuitry. The transceiver, in operation, (i) receives cell switch signalling; (ii) transmits one or more transmissions of a random-access (RA) procedure; (iii) receives one or more transmissions of the RA procedure; and (iv) transmits (a) a first Physical Uplink Shared Channel (PUSCH) transmission, wherein the first PUSCH transmission is a first transmission among PUSCH transmissions that are after completion of the RA procedure and scheduled by an Uplink (UL) grant addressed to a Radio Network Temporary Identifier (RNTI) of the communication device, or (b) a first Physical Uplink Control Channel (PUCCH) transmission that acknowledges reception of a downlink (DL) transmission, wherein the first PUCCH transmission is a first transmission among PUCCH transmissions that are after completion of the RA procedure and carry an acknowledgment of reception. The circuitry, in operation, (i) obtains, from the cell switch signalling: (a) a cell switch command indicating that a cell switch from a source cell to a target cell is to be performed by the communication device, and (b) an indication indicating a Transmission Configuration Indication (TCI) state; (ii) performs, in accordance with the cell switch command, the cell switch to the target cell; (iii) performs the RA procedure in the target cell; and (iv) determines that the indicated TCI state is to be used starting with or with completion of (a) the first PUSCH transmission, or (b) the first PUCCH transmission.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which exemplary embodiments of the present disclosure may be applied;
- **Fig. 2**: shows exemplary functional split options in 5G O-RAN to which exemplary embodiments of the present disclosure may be applied;
- **Fig. 3**: illustrates a split-gNB architecture, where a gNB is split into a gNB-central unit and one or more gNB-distributed units to which exemplary embodiments of the present disclosure may be applied;
- **Fig. 4**: illustrates a simplified signaling diagram for an intra-DU lower-layer cell switch;
- **Fig. 5a**: illustrates a contention-based RA (CBRA) procedure of the 4-step type;
- **Fig. 5b**: illustrates a contention-based RA (CFRA) procedure of the 4-step type;
- **Fig. 5c**: illustrates a contention-free RA (CBRA) procedure of the 2-step type;
- **Fig. 5d**: illustrates contention-free RA (CFRA) procedure of the 2-step type;
- **Fig. 6**: illustrates a signaling diagram for CSI measurement and reporting;
- **Fig. 7**: illustrates an exemplary signalling procedure for L1 L2-triggered mobility;
- **Fig. 8**: is a block diagram of a communication system including a user equipment and a base station with their respective exemplary functional structures;
- **Fig. 9**: is a block diagram illustrating an exemplary functional structure of the processing circuitry at the user equipment side;
- **Fig. 10**: is a block diagram illustrating an exemplary functional structure of the processing circuitry at the base station side;
- **Fig. 11**: is a flow chart illustrating exemplary steps performed by the user equipment as well as exemplary steps performed by the base station; and
- **Fig. 12a**: illustrates TCI starting time according to an exemplary embodiment in case of a 4-step CBRA procedure;
- **Fig. 12b**: illustrates the TCI starting time according to another exemplary embodiment in case of a 4-step type CBRA procedure;
- **Fig. 13a**: illustrates the TCI starting time according to an exemplary embodiment in case of a 4-step type CFRA procedure;
- **Fig. 13b**: illustrates the TCI starting time according to another exemplary embodiment in case of a 4-step type CFRA procedure;
- **Fig. 14a**: illustrates the TCI starting time according to an exemplary embodiment in case of a 2-step type CBRA procedure;
- **Fig. 14b**: illustrates the TCI starting time according to an exemplary embodiment in case of a 2-step type CFRA procedure;
- **Fig. 15a**: illustrates the TCI starting time according to another exemplary embodiment in case of a 2-step type CBRA procedure;
- **Fig. 15b**: illustrates the TCI starting time according to another exemplary embodiment in case of a 2-step type CFRA procedure;
- **Fig. 16a**: illustrates the TCI starting time according to still another exemplary embodiment in case of a 2-step type CBRA procedure;
- **Fig. 16b**: illustrates the TCI starting time according to still another exemplary embodiment in case of a 2-step type CFRA procedure;
- **Fig. 17a**: illustrates the TCI starting time according to yet still another exemplary embodiment in case of a 2-step type CBRA procedure; and
- **Fig. 17b**: illustrates the TCI starting time according to yet still another exemplary embodiment in case of a 2-step type CFRA procedure.

### DETAILED DESCRIPTION

### 5G NR system architecture and protocol stacks

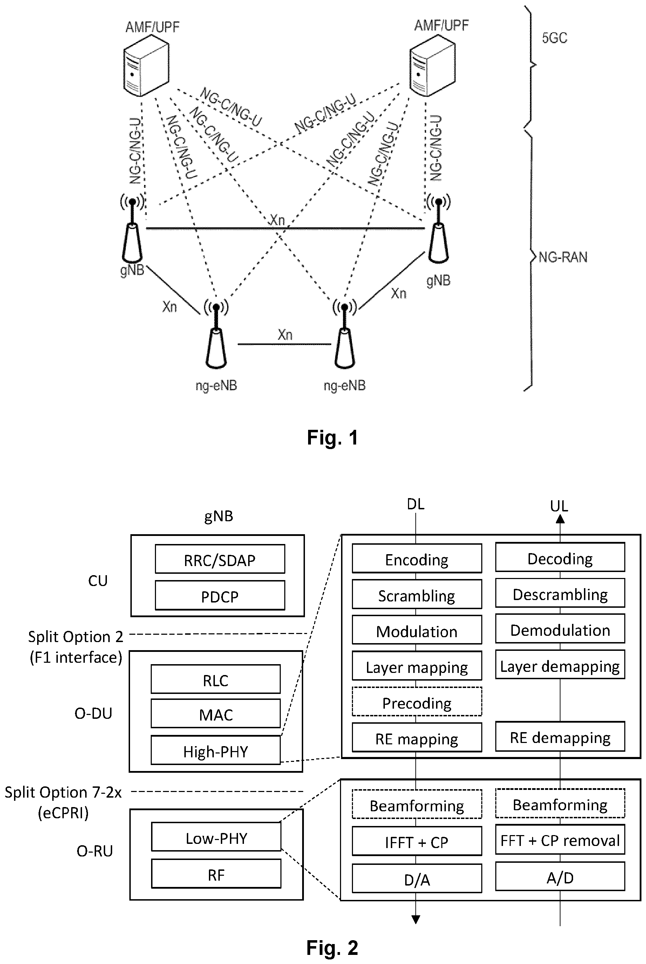

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in Fig. 1 (see e.g. 3GPP TS 38.300 v15.6.0, section 4).

### RRC connection setup and reconfiguration procedures

Interactions between a UE, gNB, and AMF (an 5GC entity) in the context of a transition of the UE from RRC_IDLE to RRC_CONNECTED for the NAS part are described (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and downlink (DL) packets with QoS Flows, whereas AS-level mapping rules in the UE and in the NG-RAN associate uplink (UL) and DL QoS Flows with DRBs.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul and the F1 interface is defined by the 3GPP. Further, the link between O-DU and O-RU is referred to as fronthaul and its functional split point may be Split Option 7-2x adopted as the O-RAN fronthaul specifications.

**FIG. 2** illustrates an example in which the base station functionality of the gNB is subjected to functional splitting into CU, O-DU, O-RU by Split Option 2 and Split Option 7-2x.

CU may include, for example, an RRC (radio resource control) function, an SOAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse First Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (First Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### Subband non-overlapping full duplex - SBFD

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### XDD: Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### Downlink control channel monitoring, PDCCH, DCI

Many of the functions operated by the UE involve the monitoring of a downlink control channel (e.g. the PDCCH, see 3GPP TS 38.300 v15.6.0, section 5.2.3) to receive e.g. particular control information or data destined to the UE.

A non-exhaustive list of these functions is given in the following:
- a paging message monitoring function,
- a system information acquisition function,
- signalling monitoring operation for a Discontinued Reception, DRX, function,
- inactivity monitoring operation for a Discontinued Reception, DRX, function,
- random access response reception for a random access function,
- reordering function of a Packet Data Convergence Protocol, PDCP, layer.

The PDCCH monitoring is done by the UE so as to identify and receive information intended for the UE, such as the control information as well as the user traffic (e.g. the DCI on the PDCCH, and the user data on the PDSCH indicated by the PDCCH).

Control information in the downlink (can be termed downlink control information, DCI) has the same purpose in 5G NR as the DCI in LTE, namely being a special set of control information that e.g. schedules a downlink data channel (e.g. the PDSCH) or an uplink data channel (e.g. PUSCH). In 5G NR there are a number of different DCI Formats defined already (see TS 38.212 v15.6.0 section 7.3.1).

Said DCI formats represent predetermined formats in which respective information is formed and transmitted. In particular, DCI formats 0_1 and 1_1 are used for scheduling PUSCH and PDSCH, respectively, in one cell.

The PDCCH monitoring of each of these functions serves a particular purpose and is thus started to said end. The PDCCH monitoring is typically controlled at least based on a timer, operated by the UE. The timer has the purpose of controlling the PDCCH monitoring, e.g. limiting the maximum amount of time that the UE is to monitor the PDCCH. For instance, the UE may not need to indefinitely monitor the PDCCH, but may stop the monitoring after some time so as to be able to save power.

As mentioned above, one of the purposes of DCI on the PDCCH is the dynamic scheduling of resources in downlink or uplink or even sidelink. In particular, some formats of DCI are provided to carry indication of resources (resource allocation, RA) allocated to a data channel for a particular user. The resource allocation may include specification of resources in frequency domain and/or time domain.

### Split gNB architecture

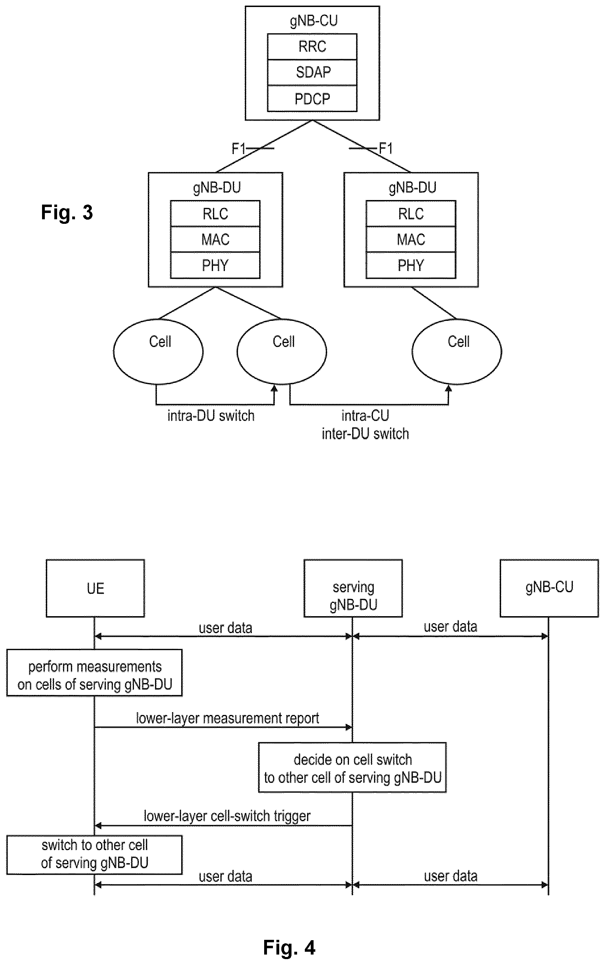

In the 3GPP standard, a gNB can be split into a gNB-CU (Central Unit) and one or more gNB-DUs (Distributed Units). This is illustrated in **Fig. 3****.**

The gNB-CU is a logical node that provides support for the higher layers of the protocol stack such as SOAP, PDCP and RRC. On the other hand, the gNB-DU is a logical node that provides support for the lower layers of the protocol stack such as RLC, MAC and Physical layer. Also, note that SOAP layer will not be present if the CU is connected to a 4G Core network as we should have 5G core network to support SOAP.

Therefore, the PHY and MAC layers are terminated at the gNB-DU, while Layer 3 (RRC) is terminated at the gNB-CU.

There is a single CU for each gNB, i.e. one gNB-DU is connected to only one gNB-CU. Alternatively, for resiliency, a gNB-DU may be connected to multiple gNB-CUs. One gNB-CU may control multiple gNB-DUs, for example more than 100 gNB-DUs can be connected to one gNB-CU. Each gNB-DU is able to support one or more cells, so one gNB can control hundreds of cells unlike the 4G BTS. One cell is supported by only one gNB-DU.

Also, note that the interface between CU and DU is named F1 and as per 3GPP, it should be an open interface. For NG-RAN, the NG and Xn-C interfaces for a gNB consisting of a gNB-CU and gNB-DUs, terminate in the gNB-CU. For EN-DC, the S1-U and X2-C interfaces for a gNB consisting of a gNB-CU and gNB-DUs, terminate in the gNB-CU. The gNB-CU and connected gNB-DUs are only visible to other gNBs and the 5GC as a gNB.

The gNB-CU/DU architecture is specified in more detail e.g. in 3GPP TS 38.401 v17.3.0, e.g. section 6.1. The F1 interface is specified in more detail e.g. in 3GPP TS 38.473 v17.3.0.

### Layer-1-Layer-2-triggered mobility (LTM)

When the UE moves from the coverage area of one cell to another cell, at some point a serving cell change needs to be performed. According to one possibility, serving cell change is triggered by L3 measurements and is done by RRC signalling triggered Reconfiguration with Synchronisation for change of PCell and PSCell, as well as release or add SCells when applicable. Such a procedure may involve complete L2 (and L1) resets, leading to longer latency, larger overhead and longer interruption time than beam switch mobility.

In the ongoing 3GPP Rel. 18 work on mobility enhancements, supporting Layer-1-Layer-2-(also termed lower-layer) triggered mobility (LTM) is one of the topics. The UE is firstly configured by the RRC (L3) with a set of candidate cells. Then, L1- or L2 signalling (e.g. a MAC CE (and/or possibly a DCI) is used to trigger the switch of the UE's serving cell among the candidate cells without RRC reconfiguration. Put differently, to facilitate a sequential cell switch, the cell switch shall be prepared in a manner that no RRC reconfiguration is needed for the UE after the cell switch, regardless of which candidate cell as a target candidate cell becomes the new serving cell. The goal is to reduce latency, overhead and interruption time for the serving cell change. Intra-DU and intra-CU inter-DU cells switches are both within the scope of Rel.18. Fig. 3 illustrates the intra-DU switch between two cells of the same gNB-DU as well as the inter-DU switch between two cells of different gNB-DUs.

Fig. 4 is a simplified and exemplary message exchange for an intra-DU lower-layer cell switch for according to the ongoing 3GPP Rel. 18 work. Correspondingly, it is exemplary assumed that the gNB-DU controls a plurality of cells, including the current serving cell of the UE. The gNB-DU is in connection with a gNB-CU.

As apparent therefrom, the cell switch is decided based on lower-layer (e.g. Layer 1 RSRP) measurements performed at the UE and reported to the gNB-DU. In more detail, the UE measures reference signals from one or more candidate cells of the gNB-DU and reports the results to the gNB-DU. The gNB-DU can use the received measurement results for determining whether to execute LTM to a candidate target cell or not. The lower-layer cell-switch trigger is transmitted to the UE, such that the UE can perform the switch from the current cell to another cell of the gNB-DU.

The benefit achieved by performing the measurement and reporting by Layer 1 is the low latency.

In Rel-18, LTM is limited to intra-CU, meaning that both serving cells and candidate cells including the target cell belong to the same gNB. But this should not be understood as the limitation of current disclosure. The disclosed concept is also applicable for the case of inter-gNB LTM, meaning that the serving cell and the target cell belong to different gNBs (for example, different gNB-CUs).

### Random Access procedure - RA procedure

In general, the RA procedure may e.g. be a 4-step or a 2-step RA procedure. In particular the RA procedure may comprise or consists of e.g. 4 or 2 steps. However, the term *"RA procedure"* is in general not to be understood to any particular number of steps or the particular examples of RA procedures described herein.

Furthermore, in general, the RA procedure may be a contention-based RA (CBRA) procedure or a contention-free RA (CFRA) procedure (see e.g. TS 38.300 v18.0.0 section 9.2.6 for a high level description).

In the following, details of the 5G NR RA procedure are described. Similar to LTE, 5G NR provides a RACH (Random Access Channel (RACH procedure)) procedure (or simply random access procedure (RA procedure). For instance, the RACH procedure can be used by the UE to access a cell it has found. The RACH procedure can also be used in other contexts within NR, for example:
- For handover, when synchronization is to be established to a new cell;
- To reestablish uplink synchronization to the current cell, if synchronization has been lost due to a too long period without any uplink transmission from the device;
- To request uplink scheduling, if no dedicated scheduling request resource has been configured for the device.

There are numerous events that may trigger the UE to perform a random access procedure (see e.g. 3GPP TS 38.300 v18.0.0, section 9.2.6), including the following. The random access procedure is triggered by a number of events:
- Initial access from RRC_IDLE;
- RRC Connection Re-establishment procedure;
- DL or UL data arrival, during RRC_CONNECTED or during RRC_INACTIVE while SDT procedure is ongoing, when UL synchronisation status is "non-synchronised";
- UL data arrival, during RRC_CONNECTED or during RRC_INACTIVE while SDT procedure is ongoing, when there are no PUCCH resources for SR available;
- Handover;
- SR failure;
- Explicit request by RRC upon synchronous reconfiguration;
- RRC Connection Resume procedure from RRC_INACTIVE;
- To establish time alignment for a primary or a secondary TAG;
- Request for Other SI;
- Beam failure recovery;
- Consistent UL LBT failure on SpCell;
- SDT in RRC_INACTIVE;
- Positioning purpose during RRC_CONNECTED requiring random access procedure, e.g., when timing advance is needed for UE positioning;
- Early UL synchronization with an LTM candidate cell;
- RACH-based LTM cell switch.

A mobile terminal can be scheduled for uplink transmission if its uplink transmission is time synchronized. Therefore, the Random Access Channel (RACH) procedure plays a role as an interface between non-synchronized mobile terminals (UEs) and the orthogonal transmission of the uplink radio access. For instance, the Random Access is used to achieve uplink time synchronization for a user equipment, which either has not yet acquired, or has lost, its uplink synchronization. Once a user equipment has achieved uplink synchronization, the base station can schedule uplink transmission resources for it. One scenario relevant for random access is where a user equipment in RRC_CONNECTED state, handing over from its current serving cell to a new target cell, performs the Random Access Procedure in order to achieve uplink time-synchronization in the target cell.

The PRACH consists of a preamble format made up of one or more preamble sequences transmitted in a time-frequency resource. The UE transmits the PRACH preamble in a PRACH occasion (RO) which is a time-frequency resource that the network allocates for preamble transmission. Each RO can be configured with 64 preambles. The higher layer parameter prach-Configurationlndex determines the PRACH preamble format and the time domain resources of PRACH occasions, by pointing to a row in the random access configuration tables of 3GPP TS 38.211 (Tables 6.3.3.2-2/3/4).

There can be at least two types of random access procedures, contention based random access (CBRA) procedure, and contention free random access (CFRA) procedure. In the CBRA procedure, multiple users randomly select a preamble from a pool of preambles, and a contention resolution phase determines which user, if any, had its data successfully received by the network. Contention resolution resolves contention between two or more users selecting the same preamble. In the CFRA procedure, a preamble is uniquely pre-allocated to the user, hence there is no possibility of preamble collision between users and no need for contention resolution. An exemplary definition of a random access procedure can be found in 3GPP TS 38.321, v18.0.0 section 5.1.

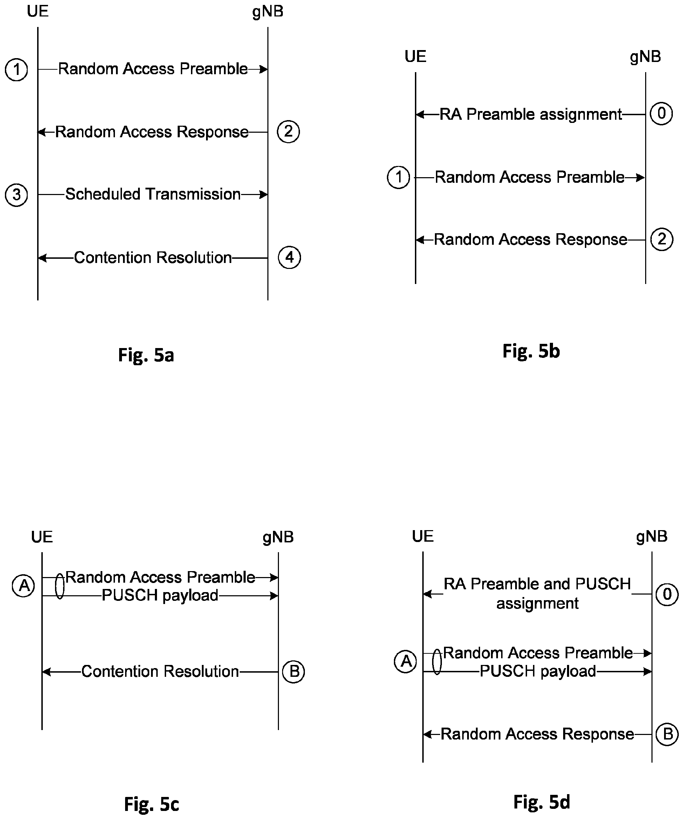

Different types of RA procedure will be described in the following in more detail, with reference to **Figs. 5a, 5b, 5c and 5d****.**

### Contention-based RA (CBRA) procedure of 4-step type

A CBRA procedure of the so-called 4-step type is described in more detail with respect to **Fig. 5a****.** In particular, such a 4-step RA procedure may comprise or even consist of four "steps" (in particular four transmissions).

As shown in Fig. 5a, in a first step, the user equipment transmits a random access preamble on the Physical Random Access Channel (PRACH) to the base station (i.e. message 1 of the RACH procedure, also referred to as Msg1). In other words, the first transmission (i.e. said first message is temporally before all other transmissions of the RA procedure) of the RA procedure is (i) transmitted by the UE to the base station, and (ii) includes a random access preamble. When the UE transmits the preamble to the gNB, it conveys the selected SS/PBCH block index to the gNB. The network configures the association between the SS/PBCH Block indices and the PRACH occasions and preamble indices by broadcast signaling.

In a second step, the gNB acknowledges the reception of the preamble by sending a random access response (RAR) e.g. on a PDSCH channel. The second transmission is also referred to as Msg2 or message 2 of the RACH procedure. In other words, the second transmission (i.e. second in time among the transmissions of the RA procedure) of the RA procedure is (i) transmitted by the base station to the UE, and (ii) includes a random access response.

The RAR may be scheduled by a Downlink Control Information (DCI) with a CRC scrambled by the Random Access Radio Network Temporary Identifier (RA-RNTI) on the corresponding PDCCH. The PDCCH of the RAR may be transmitted in Type1-PDCCH Common Search Space (CSS). The RA-RNTI is a function of the time and frequency of the PRACH occasion the preamble is detected (see e.g. 38.321).

The UE attempts to receive the RAR during the RAR window. In NR, the RAR window starts at the first symbol of the earliest CORESET (control resource set) of Type1-PDCCH CSS that starts at least one symbol after the PRACH occasion corresponding to the PRACH transmission. The RAR window size is configured in number of slots and is less than 10 ms. In case of CBRA, the DMRS port of the PDSCH channel carrying the RAR and the DMRS port of the corresponding PDCCH channel are quasi-co-located with the reference signal used for association and transmission of the corresponding preamble.

At the start of the random access procedure, the UE sets the PREAMBLE_TRANSMISSION_COUNTER to 1. If the UE doesn't receive the RAR during the RAR window with a RAPID (random access preamble identity) that matches the transmitted preamble, it increments the PREAMBLE_TRANSMISSION_COUNTER by 1 and retransmits the PRACH preamble after a back off period. After several PRACH preamble retransmissions attempts, when the PREAMBLE_TRANSMISSION_COUNTER exceeds higher layer parameter *preambleTransMax,* without receiving a RAR with a RAPID that matches the transmitted preamble, the Random Access Channel (RACH) procedure fails.

When the UE successfully decodes a RAR with a RAPID that matches the transmitted preamble and that includes a MAC RAR, the UE performs the following:
- It processes the received TA command.
- It processes the UL grant in the MAC RAR, and in response transmits a PUSCH (a.k.a. Msg3).

In the third step of the 4-step CBRA procedure, the UE transmits Msg3 on the Uplink Shared Channel (UL-SCH) on a PUSCH in response to the uplink grant of the RAR. Msg3 contains C-RNTI MAC CE if the UE triggering the CBRA procedure is in CONNECTED Mode with a C-RNTI, or it contains the CCCH SDU with the Contention Resolution Identity MAC CE. The trigger of the random access procedure, determines the content of Msg3. For example:
- During initial access, Msg3 contains RRCSetupRequest.
- During Radio Resource Control (RRC) re-establishment, Msg3 contains RRCReestablishmentRequest.
- To transition from the RRC_INACTIVE state to the RRC_CONNECTED state, Msg3 contains RRCResumeRequest or RRCResumeRequest1.
- To get system information, Msg3 contains RRCSystemlnfoRequest.
- During contention-based BFR Msg3 contains C-RNTI MAC CE.

After the UE transmits Msg3 it starts the ra-ContentionResolutionTimer and monitors the PDCCH channel. The UE can receive a PDCCH with a CRC scrambled by the TC-RNTI requesting a retransmission of Msg3, if the gNB didn't successful decode Msg3. When the UE retransmits Msg3, it restarts the ra-ContentionResolutionTimer after the Msg3 retransmission.

In the fourth step of the CBRA procedure, the gNB transmits a message to the UE (also referred to as Msg4).
- If Msg3 contained the C-RNTI MAC CE, the gNB transmits a PDCCH with CRC scrambled by the C-RNTI. Upon reception of this PDCCH, the UE stops ra-ContentionResolutionTimer and considers the CBRA procedure successful.
- If Msg3 contained the CCCH SDU, the gNB transmits a PDCCH scheduling a PDSCH with CRC scrambled by the TC-RNTI, indicated to the UE in the RAR. The corresponding PDSCH echoes back the contention resolution identity received in Msg3. Upon reception of the PDCCH scheduling a PDSCH and with CRC scrambled by the TC-RNTI, the UE decodes the corresponding PDSCH. If the contention resolution identity received in the PDSCH matches that transmitted in Msg3, the UE stops ra-ContentionResolutionTimer and considers the CBRA procedure successful and sends uplink Hybrid Automatic Repeat Request (HARQ) acknowledgement to the gNB to stop any further retransmissions of this message.
- Else when the contention resolution identity received in the PDSCH doesn't match that transmitted in Msg3, the UE stops ra-ContentionResolutionTimer and considers the Contention Resolution unsuccessful.

If the ra-ContentionResolutionTimer expires before the UE successfully receives the downlink message transmitted by the gNB, the UE considers Contention Resolution unsuccessful. If Contention Resolution is unsuccessful, the UE increments the PREAMBLE_TRANSMISSION_COUNTER by 1 and restarts the random access procedure, with preamble selection, after a back off period. After several PRACH preamble retransmissions attempts, when the PREAMBLE_TRANSMISSION_COUNTER exceeds higher layer parameter preambleTransMax, without successful completing the random access procedure, the RACH procedure fails.

### Contention-free RA (CFRA) procedures of 4-step type

**Figs. 5b** illustrates a CBFA procedure that is simplified in comparison to the 4-step CBRA procedure shown in Fig. 5a. The base station provides in a first step the UE with a dedicated preamble to use for random access so that there is no risk of collisions, i.e. no risk of multiple UEs transmitting the same preamble. Accordingly, the UE subsequently sends the preamble that was signaled by the base station in the uplink on a PRACH resource. Since the case that multiple UEs are sending the same preamble is avoided for CFRA, essentially, a CFRA procedure is finished after the UE have successfully received the random access response.

As can be seen in Fig. 5b, a 4-step CFRA may not comprise or consist of 4-steps. It may be referred to as 4-step CFRA, since the transmission of the preamble does not include PUSCH payload, which is similar to the 4-step CBRA procedure (and different from the 2-step types described below).

In more detail, the UE-dedicated preamble assignment determines:
- The preamble index.
- The mask index to determine the PRACH Occasion(s) to use for preamble transmission within the set of PRACH occasions associated with the SS/PBCH Block or the channel-state information reference signals (CSI-RS) used for preamble transmission. The UE transmits on a preassigned preamble index and PRACH occasion(s) associated with a reference signal (SS/PBCH block or CSI-RS) that exceeds a higher layer configured threshold rsrp-ThresholdSSB or rsrp-ThresholdCSI-RS.

As the preamble is preassigned by the network, there is no contention resolution phase. As the preamble is dedicated, it also identifies the UE to gNB. The random access procedure is considered successful after reception of a RAR with a RAPID that matches the transmitted preamble.

The network configures dedicated PRACH preambles through *rach-ConfigDedicated.* Dedicated PRACH preambles are also known as contention free preambles or non-contention preambles. The dedicated RACH configuration can be used for reconfiguration with sync procedures such as handover. The network can configure dedicated preambles that are associated with either SS/PBCH blocks or with CSI-RS resources. The UE identifies the SSB index/CSI-RS resources index of candidate beams, and finds the corresponding PRACH occasion and preamble index within each PRACH occasion to use.

*rach-ConfigDedicated* includes:
- The PRACH occasions to use for dedicated preambles,
- The dedicated (i.e. contention free) PRACH resources. This is a list of preamble resources associated with either SS/PBCH blocks or CSI-RS resources.
- Parameters to apply for prioritized CFRA procedures.

### CBRA and CFRA procedures of 2-step type

Both RA procedures (CBRA and CFRA), are possible in 2-step RA type too. In particular, such a 2-step RA procedure may comprise or even consist of two "steps" and thus is often termed for example as a 2-step RACH procedure. A 2-step type CBRA procedure is illustrated in **Fig. 5c****,** and a 2-step type CFRA procedures is illustrated in **Fig. 5d****.** As can be seen, the 2-step type RA procedures differ from the 4-step RA procedures in that the first transmission of the UE includes a preamble and (PUSCH) payload.

For instance (see Fig. 5c and 5d), 3GPP also defines a 2-step procedure for 5G NR, where a message 1 (for the 2-step types termed MsgA), that corresponds to messages 1 and 3 of the corresponding four-step LTE/NR RA procedure, is transmitted at first (i.e., 2-step CBRA combines/corresponds to Msg1 and Msg 3 of a 4-step CBRA in MsgA; and 2-step CFRA combines/corresponds to Msg1 and Msg 3 of a 4-step CFRA in MsgA). The MsgA of the 2-step RACH type includes a preamble on the Physical Random Access Channel (PRACH) and a payload on the Physical Uplink Shared Channel (PUSCH).

After MsgA transmission, the UE monitors for a response from the gNB within a configured time window. Then, the gNB will respond with a message 2 (termed as MsgB), corresponding to messages 2 and (for CBRA) 4 of the corresponding 4-step LTE/NR RA procedure (i.e., 2-step CBRA combines/corresponds to Msg2 and Msg 4 of a 4-step CBRA in MsgA; and 2-step CFRA combines/corresponds to Msg2 of a 4-step CFRA in MsgA).

This MsgB can include e.g. a Success random access response (RAR), a Fallback RAR, and optionally a backoff indication. If contention resolution is successful upon receiving the Success RAR, the UE ends the RA procedure; while if Fallback RAR is received in MsgB, the UE performs message 3 transmission (as in 4-step RACH procedure) and monitors contention resolution. Some further exemplary assumptions are made for the 2-step RACH procedure, such as that the UE, after deciding on the RACH type (e.g. the 2-step RACH), keeps retrying that same RACH type until failure. But there may be also the possibility that the UE can switch to the 4-step RACH procedure after certain reattempts of transmitting MsgA.

Another difference in terms of RRC is the big number of RRC configurations needed for 2-step RACH, in particular the PUSCH physical resources used to transmit MsgA (see below).

PRACH preamble and PUSCH in MsgA are transmitted in TDM (time division multiplex) fashion. The transmission of PUSCH is after the PRACH transmission by at least N symbols, where the value of N depends upon SCS (subcarrier spacing) of the active UL BWP.

Moreover, the network may semi-statically determine radio resources, to be used for performing the 2-step RACH procedure and the 4-step RACH procedure, that are exclusive from one another. The radio resources used for transmitting the first message in the RACH procedure include at least the RACH occasion as well as the preambles. For instance, in the 2-step RACH procedure, the first message MsgA uses not only the PRACH resource (e.g. the RACH occasion and preamble) but also the associated PUSCH resources.

In more detail, in 2-step RA type, PUSCH is transmitted without waiting for a response from the network, hence the UE needs to know PUSCH configuration beforehand. The configuration for PUSCH is given in the IE msgA-PUSCH-Config:
- This IE is used to specify the PUSCH allocation for MsgA in 2-step RA type. It provides the UE with all needed configuration for PUSCH transmission such as time/frequency domain resource, DMRS type, MCS, PUSCH Tx power related parameters etc.
- This IE is configured separately for CFRA and CBRA, where for CBRA, the IE msgA-PUSCH-Config is configured as part of BWP-UplinkCommon IE. For CFRA, the IE msgA-PUSCH-Config is configured as part of the IE CFRA-TwoStep (discussed later) within RACH-ConfigDedicated.

Furthermore, when doing a message-A PUSCH transmission, there is not yet any closed-loop uplink timing control. Consequently, the message-A PUSCH transmissions may arrive with a relatively large timing misalignment relative to other uplink transmissions.

Generally, for RACH preambles, see for example, 3GPP TS 38.211 V18.1.0, "Table 6.3.3.2-2: Random access configurations for FR1 and paired spectrum/supplementary uplink" and section 6.3.3.2, "Mapping to physical resources".

The UE selects 2-step or 4-step RA type at the initiation of the RA procedure based on network configuration. For the CBRA case:
- When both 4-step and 2-step RA types are configured by the network, an RSRP threshold is used by the UE to select between 2-step RA type and 4-step RA type. The RSRP threshold is configured by the field msgA-RSRP-Threshold.
- If the RSRP is above this threshold, the UE select 2-step RA type otherwise, 4-step RA type is chosen.

For the CFRA case:
- When CFRA resources for 4-step RA type are configured, the UE performs random access with 4-step RA type.
- When CFRA resources for 2-step RA type are configured, UE performs random access with 2-step RA type.
- The network does not configure CFRA resources for both 4-step and 2-step RA types at the same time.

The advantages of a 2-step RACH compared to 4-step RACH are:
- Reducing the control signal overhead
- Reduce the latency.
- Allowing PUSCH transmission at the first step.

### Beam management (BM) & Transmission Configuration Indication (TCI) signaling framework

Beam management (BM) in 5G NR has been employing a so-called Transmission Configuration Indication (TCI) signaling framework. The beam for a target channel/signal (e.g. PDSCH, PDCCH, CSI-RS) can be indicated by a TCI state. A TCI state contains parameters for configuring a quasi co-location (QCL) relationship between a source reference signal (RS) and the target channel/signal. By measuring the source RS, the UE can set the receive coefficients (e.g. spatial fliter) for the reception of the target channel/signal. In Rel-17, a unified TCI framework has been introduced, allowing a TCI state commonly applied to multiple channels/signals. The same TCI state can be applied to both DL and UL transmissions (such as PUSCH, PUCCH, SRS), called a *"joint TCI state".* In other words, a "joint TCI state" is a TCI state to be applied to /used for UL and DL transmissions.

Alternatively, UL and DL transmissions can have a separate "DL TCI state" and *"UL TCI state",* respectively. The UL TCI state is then applied to/used for UL transmissions of the UE, and the DL TCI state is applied to/used for DL transmissions of the UE. In general, there may be multiple UL and/or DL TCI states (e.g. one UL TCI state for PUCH transmissions, and one TCI state for PSUCH transmissions).

Further details of BM and the TCI signaling framework in 5G NR are described below.

### Beam management

Beam management is a set of Layer 1 (PHY) and Layer 2 (MAC) procedures to establish and retain an optimal beam pair for good connectivity. A beam pair e.g. consists of a transmit beam and a corresponding receive beam in one link direction.

Before a UE can communicate with the network, it must perform cell search and selection procedures and obtain initial cell synchronization and system information. The first steps in that process are acquiring frame synchronization, finding out the cell identity and decoding the MIB and SIB1.

In the case of a multi-antenna system that transmits multiple beams, detecting the beams from the gNB is also a part of the initial procedure (e.g. where the UE normally detects all the beams in the search space).

Beam management can be categorized into the following three main procedures:
- initial beam establishment,
- beam adjustment (also called beam tracking and refining), and
- beam failure recovery.

In brief, the network may configure periodic or semi-persistent beam reporting or trigger aperiodic beam reporting for the purpose of timely acquiring a best/preferred beam for data /control transmissions. UE performs measurements on reference signals (SSBs and/or CSI-RSs), configured by the gNB, to determine the best reception (Rx) beam (and possibly transmission, Tx, beam as well, in case of beam correspondence). In one example, for determining the UE Tx beam, the UE is configured by the gNB to transmit SRSs (Sounding Reference Signals) in different directions to the gNB, and in turn the gNB determines and indicates to the UE the best/preferred UL beam using an SRI (SRS Resource Indicator).

Beam management procedure(s) can take place during the RACH (Random Access Channel) procedure, when the gNB sweeps beams by using different DL beams for each SSB, and the UE informs the gNB about the best/preferred Rx beam by using a specific PRACH resource mapped to the selected DL beam. The beam management procedure can e.g. be part or use the CSI framework. The CSI reporting can be configured by the network to occur periodically (e.g. RRC-configured), semi-persistently (e.g. triggered by MAC-CE and/or DCI) or aperiodically (e.g. triggered by DCI). For beam management, when part of the CSI framework, a UE may be configured using an information element, IE, *CSI-ReportConfig,* with the higher-layer parameter reportQuantity set to one or more of "cri-RSRP", "cri-SINR", "ssb-Index-RSRP", "ssb-Index-SINR", "cri-RSRP-Index", "ssb-Index-RSRP- Index", "cri-SINR-Index", "ssb-Index-SINR- Index".

### Initial beam establishment

Initial beam establishment includes the procedures and functions by which a beam pair is initially established in the downlink (DL) and uplink transmission (UL) directions, for example, when a connection is established. In the current 5G NR standard, this can be done via beam sweeping, where different SSBs that are associated with different transmission, Tx, beams are transmitted in different OFDM symbols.

During beam sweeping, a gNB transmits beams in all directions in a burst at regularly defined intervals. Whenever a UE is synchronizing with the network, it reads the synchronization signal block, SSB, and extracts the primary synchronization signal, PSS, the secondary synchronization signal, SSS, the physical broadcast channel, PBCH, and the demodulation reference signal, DMRS of the PBCH.

A single SS block spans four OFDM symbols in time and 240 subcarriers in frequency (20 resource blocks). Each SS block corresponds to a specific beam, beamformed in a different direction. A group of SS blocks forms one SS burst set that spans a 5ms window. The SS burst is repeated periodically with a period of 20 ms, wherein the maximum number of SS blocks in a SS burst set is dependent on the operating frequency range.

The UE can then search for the strongest DL Tx beam, e.g. by adjusting the corresponding DL reception, Rx, beam at the UE side as well, and then can report the selection via a corresponding RACH occasion and preamble to the gNB. In this way, the initial beam pair is established, which may remain valid after a connection is set up until a new beam indication is received by UE.

### Beam adjustment

After the initial beam pair has been established, the beam pair may be constantly adjusted, in order to account for a movement of the UE and/or a change of the environment. This may be referred to as beam adjustment. In addition, beam management can also include refining the beam shape, for example using a narrower CSI-RS beam compared to a relatively wider SSB beam used for initial beam establishment.

The UE measures the beam strength by measuring a received signal power. In idle mode, beam measurement can be based on the synchronization signals, and in connected mode, it can be based on the channel state information reference signal, CSI-RS, in DL and on the sounding reference signal, SRS, in UL. The UE searches for the best beam periodically using predefined threshold criteria defined by the gNB and identifies the beam that has highest reference signal received power, RSRP. The UE may then perform a beam reporting procedure.

As beam adjustment does not happen simultaneously at the gNB and the UE, one beam per procedure - identified by their index - is the outcome that may be used for UL or DL communication. The gNB may use information and recommendations from the UE to enhance beam adjustment. Transmission of control signaling and data may benefit from the beams selected in the process, because beam adjustment aims at improving the link quality based on ever-changing radio channel conditions. The gNB is in charge of deciding which UL Rx and DL Tx beams it is going to use and of indicating the UE about them. Upon knowing the beams the gNB is using, the UE is able to select their own UL Tx and DL Rx beams.

### Beam failure recovery

Beam failure may happen if the beam cannot be tracked by the beam adjustment procedure described above. This can be the case, for example, when the current beam pair is suddenly blocked unexpectedly, and the beam tracking function cannot react quickly enough. Once a beam failure has occurred, beam recovery typically requires the following steps:
- beam-failure detection,
- candidate-beam identification,
- recovery-request transmission, and
- network response to the beam-recovery request.

For example, in the case of beam failure due to a poor channel condition, the beam recovery process is triggered to get back a new beam. The UE monitors the reference signal(s) and identifies the beam failure once the failure trigger conditions are met. The UE chooses the next best beam for sending in a random access (RA) preamble when the beam failure happens. If a first attempt of the RA fails, it sweeps to another beam for another RA procedure. The RA preamble is sent in the PRACH. Finally, the UE receives a downlink resource allocation and an uplink grant on the physical downlink control channel, PDCCH.

### Beam measurement and reporting

General operations performed during one or more of said above main procedures may involve one or more of:
- *beam sweeping,* i.e., covering a spatial area with a set of beams transmitted and received according to pre-specified intervals and directions,
- *beam measurement,* i.e., the evaluation of the quality of the received (beam) signal at the gNB or at the UE,
- *beam determination,* i.e., the selection of the suitable beam or beams either at the gNB or at the UE, according to measurements obtained with the beam measurement procedure, and
- *beam reporting,* i.e., a procedure used by the UE to send beam quality and beam decision information to the gNB.

In brief, beam measurement and reporting involves that the UE measures a set of reference signals (e.g. SSB, or CSI-RS), corresponding to different downlink Tx beams. The UE then reports these measurements to the network (e.g. the serving gNB). Based on the received measurements, the network can then e.g. decide a suitable downlink Tx beam for the UE. The measurement and reporting can be e.g. based on the CSI framework (see below section).

### Channel State Information measurement and reporting framework

The network may configure a UE to perform measurements and to report the measurement results in accordance with the configuration parameters. The measurement and reporting done by a UE can be for instance based on the CSI reporting framework of 5G NR, which generally can be considered to involve two parts, one for configuration and another one for the triggering of the CSI reporting.

The *CSI-MeasConfig* IE is the highest-level IE for CSI configuration and configures not just L1-RSRP-related measurement/reporting for beam management, but also conventional CSI-related measurement/reporting (such as CQI) to determine proper MIMO precoding, modulation and coding, etc.

Mainly three types of lists are configured by the *CSI-MeasConfig* IE:
1) List of RS resource sets
   - Each RS resource set in the list contains one or multiple RS resources. E.g. multiple CSI-RS resources can be configured e.g. by a *NZP-CSI-RS-Resource* IE and then grouped into a RS resource set by a *NZP-CSI-RS-ResourceSet* IE. Other possible RS resources are defined by the lEs *CSI-IM-Resource,* and *SSB-Index.*
2) List of *CSI-ResourceConfig* lEs
   - Different *CSI-ResourceConfig* in the list can contain one or more different RS resource sets, chosen from List element 1). This may include NZP-CSI-RS-*ResourceSet, CSI-IM-ResourceSet,* and/or *CSI-SSB-ResourceSet,* respectively identified by suitable IDs (see e.g. *NZP-CSI-RS-ResourceSetId, CSI-IM-ResourceSetId,* and/or *CSI-SSB-ResourceSetId)*
3) List of CSI-ReportConfig lEs.
   - Different *CSI-ReportConfig* in the list configure different CSI report instances. This is the Information Element which links the reporting configuration of this *CSI-ReportConfig* (such as by PUCCH or PUSCH) to the measurement resource sets (i.e. one *CSI-ResourceConfig* in the above List element 2). *CSI-ResourceConfigID,* being included in the *CSI-ReportConfig* IE, identifies a CSI-*ResourceConfig* IE to be used.

Measurements and reporting can be carried out on a periodic, semi-periodic or aperiodic basis in the time domain. The measurements results are reported by the UE to the gNB, e.g. as uplink control information on the PUCCH or the PUSCH. In one 5G-compliant example, the CSI reporting is performed by the UE based on the definitions given in 3GPP TS 38.212 v18.1.0, in section 6.3.

There are at least two types of reference signals that can be used for the measurements, the SSB (see above mentioned *SSB-Index*) and the CSI-RS (Channel State Information-Reference Signals; see above *NZP-CSI-RS-Resource* IE and *CSI-IM-Resource* IE). The SSB is always transmitted by the network and is not specific to a UE and is thus inflexible. For instance, the SSB can be used in connection with a comparatively wide beam. On the other hand, the CSI-RS can be specifically configured for a UE and is quite flexible regarding when and how often it is transmitted (time domain) and regarding the frequency-domain resources. The CSI-RS can be used in connection with a comparatively narrow beam, because it can be configured for only one or a few UEs.

There are several reporting components of CSI in 5G NR (i.e. several different types of CSI), e.g. based on 3GPP TS 38.214 - section 5.2.1 thereof:
- CQI (Channel Quality Information),
- PMI (Precoding Matrix Indicator),
- CRI (CSI-RS Resource Indicator),
- SSBRI (SS/PBCH Resource Block Indicator),
- LI (Layer Indicator),
- RI (Rank Indicator),
- L1-RSRP, and/or
- Capability Index.

One or more or a combination of different metrics can be reported by the UE. Generally, the metrics can be grouped into two types:
- L1-RSRP-related quantities (e.g. cri-RSRP and ssb-Index-RSRP, see later IE CSI-*Report Config)*
- CSI-related quantities (e.g. the rest from the IE *CSI-ReportConfig*)

The L1-RSRP-related quantities are new ones introduced for the first time in NR (Rel-15), and one of their purposes is to facilitate beam management. By contrast, the CSI-related quantities (such as CQI) are traditional ones, existing in LTE already. Those traditional CSI-related quantities can be used by the base station to choose e.g. the proper MIMO precoding, modulation and coding size, etc. to match the channel condition.

An exemplary implementation follows current definitions of the 5G 3GPP standards, such as defined in 3GPP TS 38.331, and may involve e.g. the following Information Elements (IE):
*CellGroupConfig, CSI-MeasConfig, CSI-ReportConfig, CSI-ResourceConfig, NZP-CSI-RS-Resource,* and *NZP-CSI-RS-ResourceSet.*

In brief, the measurement and reporting for the LTM can be based on the CSI reporting framework of 5G. In particular, the Information Element (IE) *CSI-MeasConfig* and the Information Element *CSI-ReportConfig* indicate parameters of the CSI reporting framework usable by the UE to measure and then report the measurement results.

One possible and exemplary sequence of lEs for defining measurement and report according to the CSI framework is presented in the following:
- *CellGroupConfig* IE
   ∘ the *ServingCellConfig* IE of *SpCellConfig* or of *SCellConfig*
      ▪ *CSI-MeasConfig* IE
         - *CSI-ResourceConfig* IE
            ∘ *NZP-CSI-RS-ResourceSet*
               ▪ *NZP-CSI-RS-Resource*
            ∘ *CSI-SSB-ResourceSet*
               ▪ *SSB-Index*
            ∘ *CSI-IM-ResourceSet*
               ▪ *CSI-IM-Resource*
         - *CSI-ReportConfig* IE

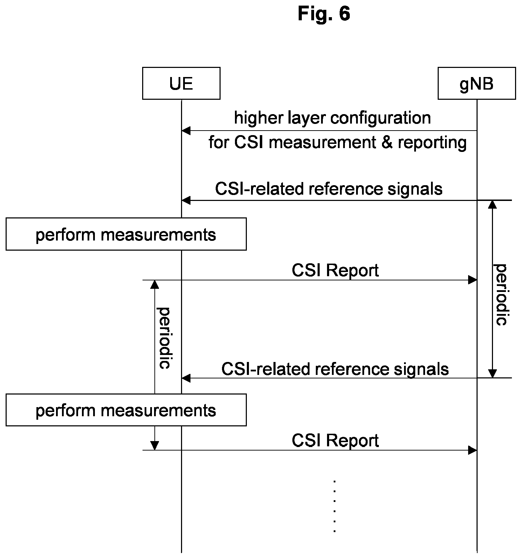

Fig. 6 illustrates an exemplary and simplified signaling exchange for a measurement reporting, assuming a periodic transmission of the reference signals and the report. As apparent therefrom, the gNB configures the UE for the measurement and reporting (e.g. as described above). The UE follows this configuration for the measurement and reporting processing. The gNB transmits the reference signals, and the UE performs the configured measurements on the received reference signals and generates the CSI report, which is then transmitted to the gNB. This can be repeatedly performed, e.g. periodically as configured.

### Transmission Configuration Indicator (TCI) states

The gNB and UE can use a so-called Transmission Configuration Indication (TCI) signaling framework. That means that the beam for a target channel, like a PDSCH, PDCCH, or a target reference signal (such as a channel state information reference signal, CSI-RS) can be indicated from a gNB to a UE by a specific TCI state. The TCI state can be used by the UE for receiving the target channel or target signal. A TCI state defines parameters for defining a quasi-co-location (QCL) relationship between a source reference signal (RS) and the target channel or target signal. Simplifying, when the source signal and target signal are QCLed (Quasi Co-Located), the two signals may have gone through (very) similar channel condition(s), e.g. same place and same antenna, using same spatial filter, etc. Accordingly, by measuring the source reference signal, the UE can appropriately set the reception coefficients (e.g. a spatial filter) and/or tune the reception antenna for the reception of the target channel/signal based on the source reference signal.

In more detail, the similarity of the channel conditions for the QCL can be influenced by different parameters which two signals might share, including for instance one or more of:
- Doppler Shift
- Doppler Spread
- Average Delay
- Delay Spread
- Spatial Rx parameter

Correspondingly, different types of QCL can be defined in 5G NR systems, such as

| Type | Description |
|---|---|
| QCL-TypeA | Doppler shift, Doppler spread, average delay, delay spread |
| QCL-TypeB | Doppler shift, Doppler spread |
| QCL-TypeC | Doppler shift, average delay |
| QCL-TypeD | Spatial Rx parameter |

In frequency range 1 (FR1, below 7.125 GHz) QCL Types A-C, and in frequency range 2 (FR2, above 24.250 GHz) QCL types A-D are applicable. For instance, the QCL Type D for FR2 indicates that a target signal (such as the PDCCH/PDSCH/CSI-RS) is transmitted with the same spatial filter as the source reference signal associated with that TCI State.

For example, a TCI state may e.g. resemble a spatial filter used for transmission and reception to/from a transmission point or TRP (Transmission Reception point).

In Release 17, a unified TCI framework has been introduced, allowing a TCI state to be commonly applied to both DL and UL channels/signals including not only downlink but also target uplink channels, like PUSCH or PUCCH, or target uplink reference signals, like a sounding reference signal (SRS); such a TCI state can be called "joint TCI state". On the other hand, Release 17 supports alternatively the possibility that a UL transmission can have a separate "TCI UL state".

An exemplary TCI state operation involves the following:
- Step 1: The UE is configured with a list of TCI states, e.g. by higher-layer signaling (such as RRC signaling) from a gNB, and possibly depending on the UE capability.
- Step 2: A subset of TCI states, among all the configured TCI states is then activated. For example, the UE receives a medium access control, MAC, control element, CE, message from the gNB for activating a subset of e.g. up to 8 TCI states among the preconfigured TCI states. Each activated TCI state is mapped by the UE to one codepoint (e.g. 3 bits) that can be indicated by the DCI field "*Transmission Configuration Indication".*
- Step 3: One out of the 8 activated TCI states is then actually used by the UE to receive a target channel/signal. For example, the UE receives a DCI signal, which indicates one of the codepoints in the DCI field "*Transmission Configuration Indication*". The UE applies the indicated codepoint to the target channel(s) or target signal(s).

### Configuration of TCI states (TCI Configuration)

According to one exemplary implementation (see e.g. 3GPP TS 38.214, v18.1.0), a UE can be configured by higher layer signaling (e.g. RRC signaling) with a list of up to *M TCI-States.* The number M of configured TCI states depends on the UE capability, and can, for example, be up to 128 TCI states for the PDSCH and up to 64 TCI states for the PDCCH.

The IE *TCI-State,* as described in 3GPP TS 38.331, v18.0.0, section 6.3.2, associates one or two DL reference signals (here SSB and/or CSI-RS) with a corresponding quasi-colocation (QCL) type (for DL or joint DUUL operation) as follows:

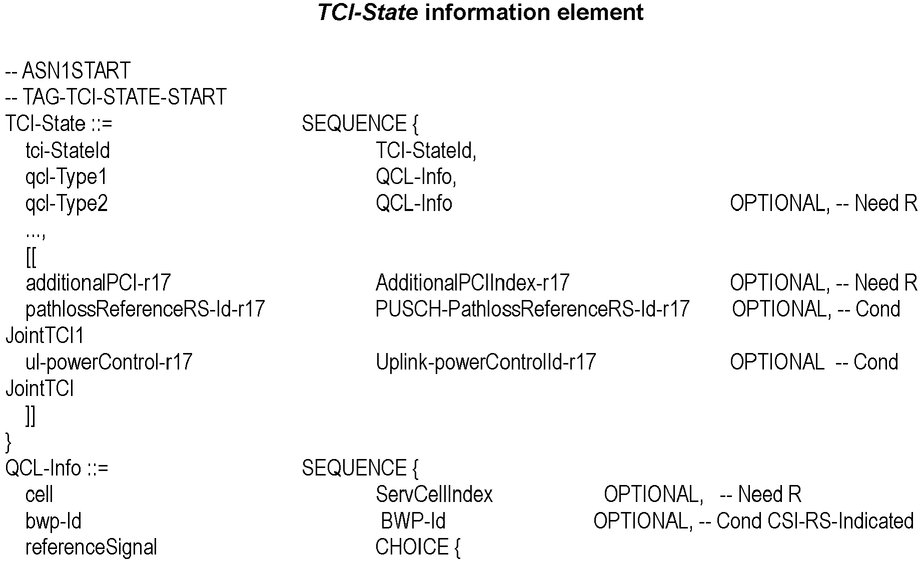

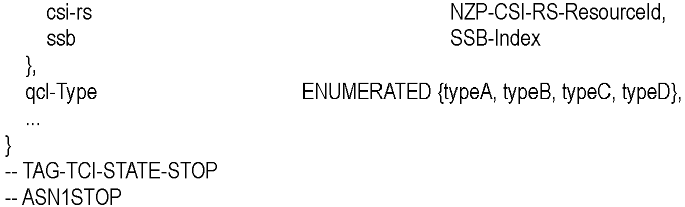

| ***QCL-Info* field descriptions** |
|---|
| ***bwp-Id*** |
| The DL BWP which the RS is located in. If the field is absent, the RS is located in the DL BWP in which the *TCI-State* is applied by the UE. |

| ***cell*** |
|---|
| The UE's serving cell in which the *reference Signal* is configured. If the field is absent, the *referenceSignal* is configured in the serving cell in which the *TCI-State* is applied by the UE. The RS can be located on a serving cell other than the serving cell for which the *TCI-State* is applied by the UE only if the *qcl-Type* is configured as *typeC* or *typeD.* If the *referenceSignal* is set to *csi-rs* and *unifiedTCI-StateType* is configured, either both *cell* and *bwp-Id* are present or both *cell* and *bwp-Id* are absent. See TS 38.214 [19] clause 5.1.5. |

| ***referenceSignal*** |
|---|
| Reference signal with which quasi-collocation information is provided as specified in TS 38.214 [19] clause 5.1.5. |

| ***qcl-Type*** |
|---|
| QCL type as specified in TS 38.214 [19] clause 5.1.5. |

| ***TCI-State* field descriptions** |
|---|
| ***additionalPCI*** |
| Indicates the physical cell IDs (PCI) of the SSBs when *referenceSignal* is configured as SSB for both QCL-Type1 and QCL-Type2. In case the cell is present, the *additionalPCI* refers to a PCI value configured in the list configured using *additionalPCI-ToAddModList* in the serving cell indicated by the field cell. Otherwise, it refers to a PCI value configured in a list *additionalPCI-ToAddModList* configured in the serving cell where the *TCI-State* is applied by the UE. When this field is present the *cell* for *qcl-Type1* and *qcl-Type2* is configured with same value, if present. |

| ***pathlossReferenceRS-Id*** |
|---|
| The ID of the reference signal (e.g. a CSI-RS or an SS block) used for PUSCH, PUCCH and SRS path loss estimation. This field refers to an element in the list configured using *pathlossReferenceRSToAddModList* in the serving cell and UL BWP where the TCI State is applied by the UE. |

| ***qcl-Type1, qcl-Type2*** |
|---|
| QCL information for the TCI state as specified in TS 38.214 [19] clause 5.1.5. |

| ***tci-StateId*** |
|---|
| ID number of the TCI state. |

| ***ul-PowerControl*** |
|---|
| Configures power control parameters for PUCCH, PUSCH and SRS for this TCI state. The field is present here only if *ul-powerControl* is not configured in any *BWP-Uplink-Dedicated* of this serving cell. This field refers to an element in the list configured using *uplink-PowerControlToAddModList* in the serving cell where the *dl-OrJointTCI-StateToAddModList* is configured. |

| **Conditional Presence** | **Explanation** |
|---|---|
| *CSI-RS-Indicated* | This field is mandatory present if *csi-rs* is included and *unifiedTCI-StateType* is not configured. This field is optionally present, Need R, if *csi-rs* is included and *unifiedTCI-StateType* is configured. Otherwise, it is absent, Need R. |
| *JointTCI* | This field is optionally present, Need R, if this serving cell is configured with *unifiedTCI-StateType* set to '*joint*'. It is absent, Need R, otherwise. |
| *JointTCI1* | This field is mandatory present, if this serving cell is configured with unifiedTCi-StateType set to 'joint'. It is absent, Need R, otherwise. |

For the uplink, the information element *TCI-UL-State* is defined in 3GPP TS 38.331, section 6.3.2.

### Further Improvements

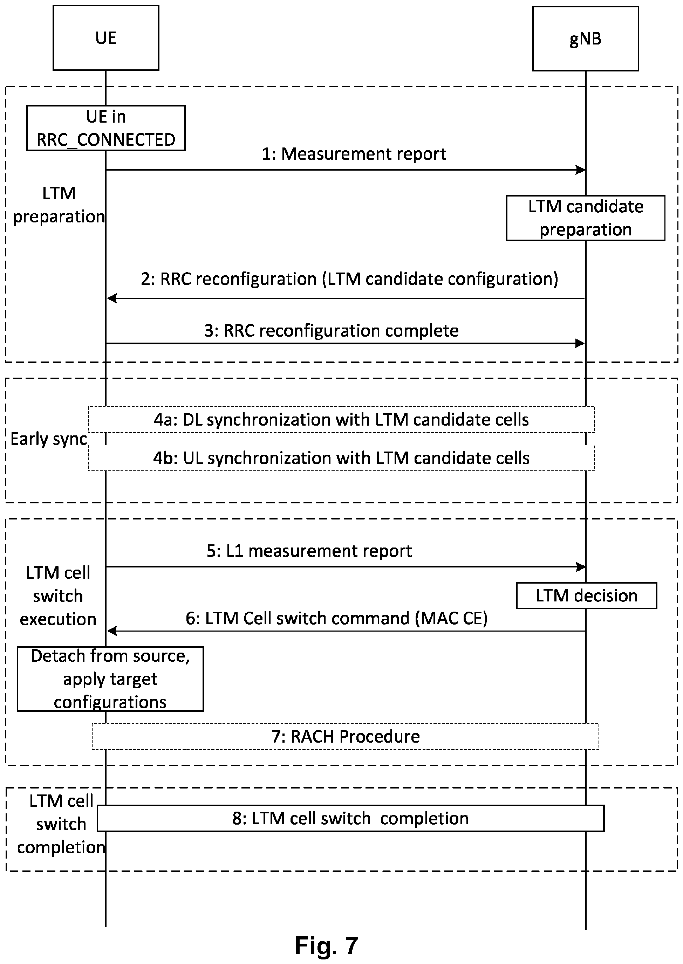

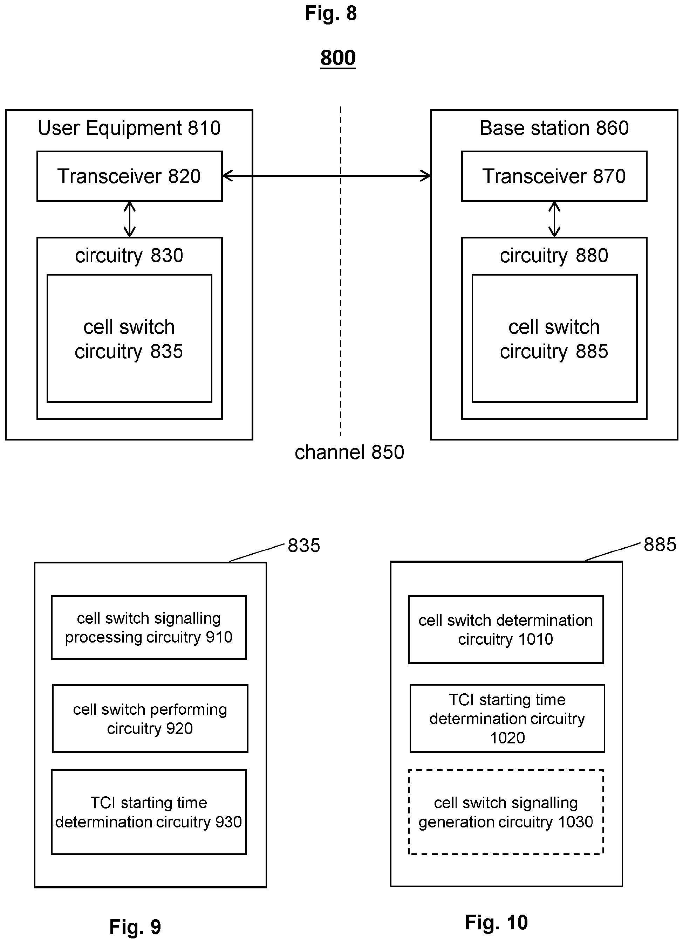

Release 18 has introduced lower layer mobility, also referred to as L1L2 triggered mobility (LTM). Some aspects thereof have already been described above in particular with reference to Figs. 3 to 4. Further details of the signaling procedure for LTM can be found in 38.300_CR0833 (R2-2401610) and are illustrated in Fig. 7 (corresponding to Figure 9.2.3.5.2-1 of 38.300_CR0833 (R2-2401610)).

In particular, in step 6, gNB decides to execute a cell switch to a target cell and transmits an LTM cell switch command MAC CE triggering the cell switch. This LTM cell switch command may include:
- a target configuration ID which indicates the index of the candidate configuration index of the target cell,
- a beam indicated with a TCI state or beams indicated with DL and UL TCI states, and
- a timing advance command for the target cell, if available.

The UE switches to the target cell and applies the candidate configuration indicated by candidate the target configuration index ID. In step 7, UE may perform a RA procedure towards/in the target cell, if UE does not have valid TA of the target cell.

The UE may in particular not have valid TA of the target cell if the early synchronization in the optional step 4b in Fig. 7 is not performed. Thus, the RA procedure is usually performed if no early synchronization with the target cell is performed (and vice versa).

The beam and/or TCI state, indicated, in the cell switch command is intended for UE to use for transmissions and/or receptions on the target cell. However, according to legacy random access procedure, it is the UE who selects a beam to transmit PRACH and to monitor RAR (random access response) on the target cell (which might be different from the indicated beam). Thus, it is unclear when UE should apply the indicated beam in the cell switch command. As a consequence, mismatching beam usage between base station and UE could happen. Regarding this, in the RAN2#124 meeting (Nov.2023), it has been agreed that:
- for RRC configured CFRA, UE selects from the RRC configured beams for CFRA (if above the RSRP threshold as in legacy); and
- for CBRA, UE selects a beam based on RSRP and ignores indicated beam in CBRA.

Furthermore, in the RAN1#116 meeting (Feb.2024), it has been agreed that, for RA based LTM procedure (i.e. LTM procedure with RA procedure), the UE will use the TCI state indicated in the LTM cell switch command after the completion of RA procedure. However, it is still ambiguous at what stage/time that UE shall apply the beam indicated in the cell switch command.

The inventors have identified the above-discussed problem with beam usage after a cell switch in case of a RACH procedure. The inventors have thus identified the possibility of providing improved procedures, for allowing to avoid one or more of the above described disadvantages. The present invention relates to different solutions and variants for such improved procedures. While problem has been described with respect to L1L2 triggered mobility of NR Release 18, these solutions and improved procedures apply in general to a scenario in which a communication device
- receives cell switch signalling indicating (i) a cell switch to a target cell, and (ii) a TCI state (or beam) to be used by the UE;
- switches to the target cell (in accordance with said cell switch signalling); and
- performs a RA procedure in the target cell (in particular, the first transmission of the UE in the target cell, may be a transmissions of a RA procedure (i.e. Msg1 or MsgA in LTE/NR)).

It is noted that the present disclosure refers to such cell switches as *"RA-based cell switches".*

The present disclosure provides techniques for allowing the UE (and the target cell's base) after performing a RA-based cell switch to a target cell, an appropriate beam for communication with the target cell's base station while reducing the risk of mismatching beam usage (which happens when base station and UE assume that different beams/TCI state are to be used). In particular, usage of a beam/TCI state indicated to the UE together with the cell switch command can begin an appropriate time.

### Embodiments

The present disclosure in particular provides a scheduling devices, corresponding methods for base stations (or scheduling devices), communication devices (or UEs), corresponding methods for base stations and communication devices, communications systems comprising such base stations and communication devices, as well as integrated circuits which, in operation, control a processes of base stations/ communication devices perform the respective methods.

As already mentioned above, the present disclosure provides a scheduling device (e.g. a base station) and a communication device (e.g. a scheduled device or user equipment). The present disclosure further provides a system including a scheduled and scheduling device, as well as a corresponding methods, integrated circuits, and programs. An example of such communication system is illustrated in Fig. 8. The communication system 800 may be a wireless communication system in accordance with the technical specifications of 5G, in particular a NR communication system. However, the present disclosure is not limited to 3GPP NR terrestrial networks (TN) and may also be applied to NTNs or other wireless or cellular systems.

Fig. 8 illustrates a general, simplified and exemplary block diagram of a communication device 810 (here exemplarily assumed to be a UE) and a scheduling device 860 (here exemplarily assumed to be located in a base station, e.g. in a LTE eNB (alternatively termed ng-eNB) or the gNB in 5G NR). However, in general, a scheduling device may also be a terminal in case of a sidelink connection between two terminals. Moreover, in particular with respect to the use cases of URLLC; eMBB, and mMTC, the communication device 810 may also be a sensor device, a wearable device, or a connected vehicle, or a controller of an automated machine in an industrial factory. Further, a communication device 810 may be able to function as a relay between a base station and another communication device (e.g. the disclosure is not limited to communication "terminals" or user "terminals").

As illustrated in **Fig. 8**, the communication device 810 and the base station 860 (eNB/gNB) may communicate with each other over a (wireless) physical channel 850 respectively using their transceivers 820 (UE side) and 870 (base station side). Together, the base station 860 and the terminal 810 form the communication system 800. The communication system 800 may further include other entities such as those shown in Fig. 1.

### Transceiver

As illustrated in **Fig. 8** (left-hand side), a communication device may comprise a transceiver and circuitry (or processing circuitry), and a base station may comprise a transceiver and a (processing) circuitry. The ***transceiver*** in turn may comprise and/or function as a receiver and/or a transmitter. In this disclosure, in other words, the term "***transceiver***" is used for hardware and software components that allow the communication device, or, respectively base station to transmit and/or receive radio signals over a wireless channel. Accordingly, a transceiver corresponds to a receiver, a transmitter, or a combination of receiver and transmitter. Typically, a base station and a communication device are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. Moreover, the term "circuitry" includes processing circuitry formed by one or more processors or processing units, etc.

A transmitter may be responsible for performing the process of transmitting and other processes related thereto. A receiver may be responsible for performing the process of receiving and other processes related thereto, such as monitoring a channel.

### Circuitry

A ***circuitry*** or ***processing circuitry*** may be one or more pieces of hardware such as one or more processors or any LSIs. Between the transceiver and the processing circuitry there may be an input/output point (or node) over which the processing circuitry, when in operation, can control the transceiver, i.e. control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc.

### Communication Device (e.g., a UE) & corresponding method

According to an exemplary embodiment, a communication device 810, e.g. a UE as illustrated in **Fig. 8** (left-hand side) is provided. The communication device 810 comprises a transceiver 820 and circuitry 830.

The transceiver 820, in operation:
- receives, e.g. in the source cell, control signalling (in the present disclosure, referred to as *"cell switch signalling"*)*.* In general, the cell switch may be received when the UE is in a RRC_CONNECTED state and/or the source cell is the current serving cell of the UE;
- transmits, in the target cell, one or more transmissions of a RA procedure;
- receives, in the target cell, one or more transmissions of the RA procedure; and
- transmits a first PUSCH transmission or a first PUCCH transmission (whether a first PUSCH or a first PUCCH is transmitted depends on the details of the determination of the *"TCI starting time",* further explained below. E.g., if the starting time is based on the completion of the first PUCCH, there is a first PUCCH to be transmitted).

The (processing) circuitry 830, in operation:
- obtains, from the cell switch signalling, a cell switch command and an indication indicating a TCI state (in the present disclosure, said indication is referred to as *"TCI state indication"* and said TCI state is referred to as *"indicated TCI state*");
- performs, in accordance with the cell switch command, the cell switch to the target cell (it is noted that the present disclosure is not limited to any particular details of the cell switch);
- performs the RA procedure in the target cell (it is noted that the present disclosure is not limited to any particular details of the RA procedure); and
- determines a TCI starting time as of which the indicated TCI state is to be used (details of this determination are further explained below).

For instance, the communication device 810 may obtain the cell switch command and the TCI state indication from the cell switch signalling by parsing the cell switch signalling and/or extracting, from the cell switch signalling, said cell switch command and TCI state indication.

It is noted that circuitry 830 may implement more than the above-mentioned functionality. For instance, circuitry 830 may further control the transceiver 820 to receive the cell switch signalling and/or to receive or transmit other data/control information (in particular control the transceiver to perform any other transmission/reception disclosed herein). Thus, the circuitry 830 is exemplarily considered to include cell switch circuitry 835, which is configured to perform the above-mentioned processing of the cell switch signalling, the cell switch, and the determination of the TCI starting time after the cell switch (and the RA procedure). The configuration may be provided by hardware adaption and/or by software.

Fig. 9 shows an exemplary functional structure of the cell switch circuitry 835. In particular, the cell switch circuitry 835 may include:
- cell switch signalling processing circuitry 910, which obtains the cell switch command and the TCI state indication from the cell switch signalling
- cell switch performing circuitry 920 which performs, in accordance with the cell switch command, the cell switch to the target cell; and
- TCI starting time determination circuitry 930 which determines the TCI starting time as of which the indicated TCI state is to be used.

It is noted that the cell switch circuitry 835 may also implement more functionality, as it may, for instance, also be responsible for performing the mentioned RA procedure.

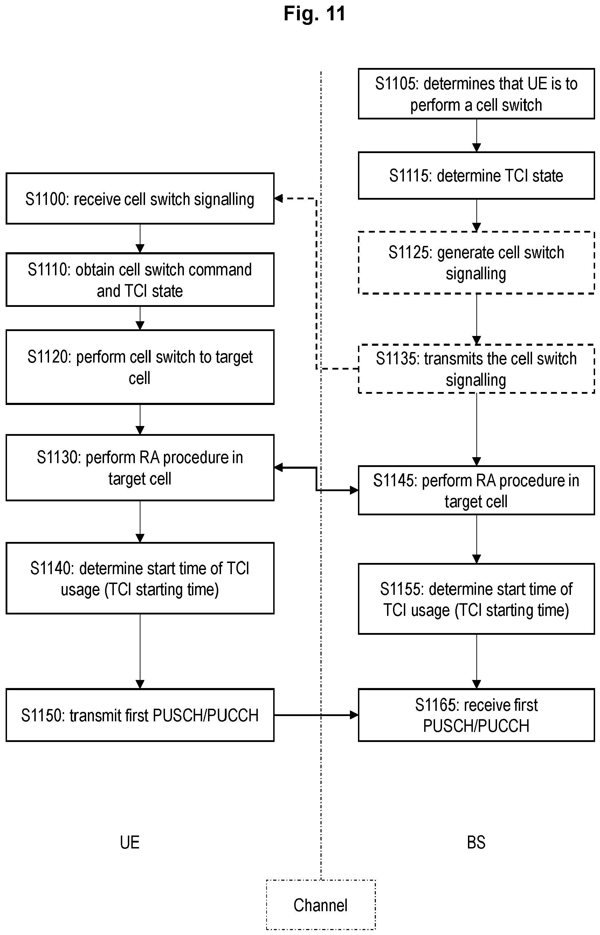

In correspondence with the above described communication device, a method to be performed by a communication device is provided. As shown in Fig. 11, the method comprises a step of
- receiving S1100 cell switch signalling;
- obtaining S1110, from the cell switch signalling, a cell switch command and a TCI state indication;
- performing S1120, in accordance with the cell switch command, the cell switch to the target cell;
- performing S1130 a RA procedure in the target cell, comprising transmitting one or more transmissions of the RA procedure and receiving one or more transmissions of the RA procedure;
- determining S1140 a TCI starting time as of which the indicated TCI state is to be used (details of this determination are further explained below); and
- transmitting S1150 the first PUSCH transmission or transmitting the first PUCCH transmission.

### Base station (BS) & corresponding method

As also shown in **Fig. 8** (right-hand side), according to another exemplary embodiment, a base station base station 860 is provided. The base station 860 comprises a transceiver 870 and circuitry 880.

The (processing) circuitry 880, in operation:
- determines that a communication device is to perform a cell switch from a source to a target cell in accordance with cell switch signalling including an indication of an TCI state that is transmitted to the communication device in the source cell, the target cell being operated by the base station;
- performs (in the target cell) a RA procedure with the communication device; and
- determining a TCI starting time as of which the TCI, indicated by the cell switch signalling, is to be used by the communication device (details of this determination are further explained below).

The transceiver 870, in operation:
- transmits (in the target cell) one or more transmissions of the RA procedure to the communication device,
- receives (in the target cell) one or more transmissions of the RA procedure to the communication device, and
- receives (in the target cell) from the communication device, the first PUSCH transmission, or the first PUCCH.

The circuitry 880 may implement more than the above-mentioned functionality. For instance, circuitry 880 may determine the TCI state to be used by the communication device as of a TCI starting time, and/or control the transceiver 870 to transmit the cell switch signalling and/or to receive or transmit data/control information (in particular control the transceiver to perform any other transmission/reception disclosed herein).

Thus, the circuitry 880 is exemplarily considered to include cell switch circuitry 885, which may be configured to perform (i) the determination that the communication device is to perform a cell switch, (ii) the determination of the TCI state to be used by the communication device as of a TCI starting time, (iii) generation of the cell switch signalling, (iv) performing the RA procedure with the communication device; and (v) the determination of the TCI starting time. The configuration may be provided by hardware adaption and/or by software.

An exemplary functional structure of cell switch circuitry 885 is shown in **Fig. 10****.** In particular, the cell switch circuitry 885 may include:
- cell switch determination circuitry 1010, which may make the determination that the communication device is to perform a cell switch; and
- TCI starting time determination circuitry 1020 which may determine the TCI starting time.

It is noted that the cell switch circuitry 885 may also implement more functionality, as it may, for instance also be responsible, for instance, also be responsible for performing the mentioned RA procedure.

It is noted that, in general, the source cell and the target cell of the cell switch performed by the communication device may be operated by the same BS or may be operated by mutually different BSs. In other words, BS 860 may be operating the target cell and not be operating the source cell, or BS 860 may be operating the target and the source cell.

In general, the BS operating the source cell may be responsible for (i) deciding whether/when the communication device is to perform the cell switch, (ii) determining the TCI state to be indicated in the cell switch signalling, (iii) generating and/or transmitting the cell switch signalling to the communication device. Thus, for the case that the BS 860 also operates the source cell, circuitry 880, in operation, may further:
- determine the TCI state to be used by the communication device as of the TCI starting time (this may be done e.g. also by the TCI starting time determination circuitry 1020); and
- generate the cell switch signalling that includes (a) a cell switch command indicating that the cell switch is to be performed and (b) an indication indicating the TCI state.

Accordingly, for the case that the BS 860 also operates the source cell:
- cell switch circuitry 885 may further include cell switch signalling generation circuitry 1030 which may be configured to generate the cell switch signalling, and
- the TCI starting time determination circuitry 1020 may e.g. also determine the indicated TCI state.

Furthermore, for the case that the BS 860 also operates the source cell, the transceiver 870 of the BS, in operation, may transmit, in the source cell, the cell switch signalling to the communication device.

It is noted that, in the case that BS 860 does not operate the source cell, it may be informed, by the source cell (e.g. by receiving an indication via an interface between network nodes):
- that the communication device is to perform a cell switch to the target cell, and
- the TCI state indicated in the corresponding cell switch signalling transmitted or to be transmitted to the communication device.

In the case that BS 860 does not operate the source cell, circuitry 880 may thus, in operation:
- obtain an indication/signalling,
- determine, based on said indication/signalling, the indicated TCI state, the and
- perform, based on said indication/signalling, the already-mentioned determination that the communication device is to perform a cell switch based on a cell switch signalling that includes an indication of a TCI state.

It is noted that in this case the target cell BS does not make a decision in this determination, but derives/obtains the result of the decisions (whether to cell switch/target cell/which TCI state to indicate) already performed e.g. by the source cell BS.

Furthermore, in correspondence with the above described base station, a method to be performed by a base station is provided. As shown in Fig. 11, the method comprises a step of
- determining S1105 that a communication device is to perform a cell switch from the source cell to the target cell in accordance with control signalling, transmitted to the communication device in the source cell, the target cell being operated by the base station;
- performing S1145(in the target cell) the RA procedure with the communication device, comprising (a) transmitting (in the target cell) one or more transmissions of the RA procedure to the communication device, and (b) receiving (in the target cell) one or more transmissions of the RA procedure from the communication device;
- determining S1155 a TCI starting time (details of this determination are further explained below); and
- receiving S1165 (in the target cell) from the communication device (a) the first PUSCH transmission or (b) the first PUCCH transmission.

As also shown in Fig. 11, the method may further include a step of determining S1115 a TCI state to be used by the communication device starting with or with completion of (a) the first PUSCH transmission or (b) the first PUCCH transmission.

As further indicated in Fig. 11, if the case that BS 860 operates the source cell, the method may thus comprise a step of
- generating S1125 the cell switch signalling that includes (a) the cell switch command indicating that the cell switch from the source cell to the target cell is to be performed, and (b) an indication indicating the TCI state; and/or
- transmitting S1135, in the source cell, the cell switch signalling to the communication device.

As also mentioned above, if BS 860 operates the source cell, BS860 (i) may in S1105 make the decision that a cell switch is to be performed, and (ii) may in step S1115 make the decision which TCI state is to be indicated in the cell switch signalling. If, on the other hand, BS 860 does not operate the source cell, BS860 (i) may, in S1105, determine, based on an obtained indication, the result of a decision about cell switch made by another entity, and (ii) may, in step S1115, determine, based on an obtained indication, the result of a decision which TCI state is to be indicated in the cell switch signalling.

It is noted that the present disclosure relates to two entities, a UE (typically communication device/transceiver device) and a base station (typically a network node). Accordingly, in the further description, the details and embodiments apply to (and may be implemented by them) each of the communication device, the base station (or scheduling node), and the corresponding methods/circuits unless explicit statement or context indicates otherwise. Both the base station side and the UE side may determine the TCI starting time in same way and leading to a TCI starting time described herein. Furthermore, the base station may be configured to generate and transmit the control signals as described below and the communication device/UE may be configured to receive such signalling and obtain the respective indications therefrom. In particular, any of the steps/operations described below may be performed or controlled by the circuitry 830 (on the UE side) and/or the circuitry 880 (on the base station side). Furthermore, any reception and transmission steps may be performed by the transceiver 820 (on the UE side) and/or the transceiver 870 (on the base station side) (e.g. by being controlled by the respective circuitry to do so).

### TCI Starting time

In general, the term *"TCl starting time"* refers to the point in time as of which the TCI state(s), indicated by the cell switch signalling, is/are to be used by the communication device (and, in general, also by the base station for transmissions/receptions with said communication device). In particular, the TCI starting time is a common starting time for the UL and DL TCI state. In other words:
- if the TCI state indication indicates a TCI state pair, TCI starting time may refer to the point in time as of which the UL and DL TCI state of said TCI state pair are respectively to be used for UL and DL transmissions, and
- if the TCI state indication indicates joint TCI state, TCI starting time may refer to the point in time as of which the indicated TCI state is to be used for UL and DL transmissions.

In general, the UE and BS apply the indicated beam in the cell switch signalling for transmissions or receptions on the target candidate cell, that are after completion of the RA procedure. For instance, the first/earliest transmission or first/earliest reception using the indicated beam may be the first PUSCH or first PUCCH. The first/earliest transmission or first/earliest reception using the indicated beam may also be the transmission or reception (directly) after the first PUSCH or first PUCCH.

More specifically, in general, the TCI starting time may be the beginning or the end (or completion) of the first PUSCH transmission or the first PUCCH transmission. More specifically, the starting TCI starting time may be:
- case/solution A): the beginning of the first PUSCH transmission (the first PUSCH transmission is transmitted using the indicated TCI state),
- case/solution B): the beginning of the first PUCCH transmission (the first PUCCH transmission is transmitted using the indicated TCI state),
- case/solution C): the end/completion of the first PUSCH transmission (the first PUSCH transmission may not be transmitted using the indicated TCI state), or
- case/solution D): the end/completion of the first PUCCH transmission (the first PUCCH transmission may not be transmitted using the indicated TCI state).

When the UE/BS (e.g. circuitry 835/885) determination of the starting time, the UE/BS may determine that the indicated TCI state is to be used starting with or with completion of said starting time. More specifically:
- in the above case A), the UE/BS may determine that the indicated TCI state is to be used starting with the first PUSCH transmission;
- in the above case B), the UE/BS may determine that the indicated TCI state is to be used starting with the first PUCCH transmission;
- in the above case C), the UE/BS may determine that the indicated TCI state is to be used starting with completion of the first PUSCH transmission (in other words, starting immediately after completion of the first PUSCH transmission); and
- in the above case D), the UE/BS may determine that the indicated TCI state is to be used starting completion of the first PUCCH transmission (in other words, starting immediately after completion of the first PUCCH transmission).

For instance, in case of solution A), the indicated TCI state may be used starting from the slot of the first/earliest symbol of the first PUSCH. In case of solution B), the indicated TCI state may be used starting from the slot of the first/earliest symbol of the first PUCCH. In case of solution C), the indicated TCI state may be used starting from the first/earliest symbol of the first slot that is after the last symbol of the first PUSCH. In case of solution D), the indicated TCI state may be used starting from the first/earliest symbol of the first slot that is after the last symbol of the first PUCCH.

By applying one of the above solutions A) to D), beam usage alignment can be achieved between UE and BS, without impacting the legacy UE-initiated beam selection during RA.

In general, in order to implement one of the above solutions A) to D) in a standard specification (e.g. 3gpp), a channel may be also be specified for UE/BS to start applying the indicated beam.

For instance, it could be specified that the indicated beam/TCI state is to be used beginning with or beginning with completion of the first PUSCH/PUCH channel transmission. One of the above solutions A) to D) may also be implemented in a standard specification by giving a precise interpretation to the phrase *"completion of random access procedure".* For example, "*completion of random access procedure"* could be interpreted to mean starting with or starting with completion of the first PUSCH/PUCCH transmission.

For instance, solution A) could be implemented in the standard specifications, by defining the completion of random process for RACH-based LTM as follows:
- A 4-step CBRA procedure is completed after/when a PDCCH addressed to the C-RNTI of the UE that contains a UL grant for a new transmission is successfully decoded by the UE after Msg3.
- A 4-step CFRA procedure is completed after/when the RAR message is successfully received by the UE.
- A 2-step CBRA/CFRA procedure is completed in case that MSGA includes C-RNTI, after/when
   ∘ a PDCCH addressed to the C-RNTI of the UE and the corresponding scheduled transport block are successfully decoded by the UE, or
   ∘ a PDCCH addressed to the C-RNTI of the UE that contains a UL grant for a new transmission is successfully decoded by the UE.

The case A) differs from case C) in that the indicated TCI state is also to be used for the first PUSCH transmission. After the first PUSCH transmission (in case A) and C)), the indicated TCI state is used for any/each transmissions (and receptions in case of a joint TCI state) until a new TCI state is determined by the BS and indicated to the UE. In the case of C), the indicated TCI state is thus to be used for any/each transmission (and, if applicable, reception) that is after said first PUSCH transmission.

The case C) differs from case D) in that the indicated TCI state is also to be used for the first PUCCH transmission. After the first PUCCH transmission (in case B) and D)), the indicated TCI state is used for any/each transmissions (and receptions in case of a joint TCI state) until a new TCI state is determined by the BS and indicated to the UE. In the case of C), the indicated TCI state is thus to be used for any/each transmission (and, if applicable, reception) that is after said first PUCCH transmission.

It is noted that the above procedures do not exclude that, in some cases, transmissions before the TCI starting time (e.g. transmissions of the RA procedure) use a same TCI state as the indicated TCI state. However, may be seen as a coincidence that only happens in some cases, as the TCI state for the RA procedure is determined based on criteria such as a particular reference signal quality and not determined based on the TCI state indication. Furthermore, even in such a case, the TCI starting time of the indicated TCI state is still the TCI starting time, determined in accordance with the present disclosure and not the beginning of e.g., the RACH procedure.

It is noted that the different solutions A) to D) may be combined e.g. by using different solutions for different types of RA procedures (4-step CBRA, 4-step CFRA, 2-step CBRA, and 2-step CFRA) can be combined. In other words, a UE/base station can be configured to operate according to e.g. any of the 4-step CBRA embodiments, described below, when performing a 4-step CBRA, and to operate e.g. to any of the 2-step CBRA embodiments when performing a 2-step CBRA. Further details, regarding solutions A) to D) are described below with respect to different types of RA procedures.

### Cell switch signalling

In general, the cell switch signalling is a transmission from the base station to the UE that includes:
- a cell switch command indicating that the cell switch from the source cell to the target cell is to be performed (by the communication device receiving the cell switch command), and
- an indication (i.e. the TCI state indication) indicating a TCI state (i.e. indicating the indicated TCI state).

In general, the cell switch command may be or include an indication of the target cell. For instance, a target configuration ID which indicates the index of the candidate configuration index of the target cell. It is noted that the cell switch signaling may also be or referred to as "cell switch command" (e.g. in 6.1.3.75 of TS 38.321 v18.0.0), and/or the TCI state indication may be included inside cell switch command.

The TCI state indication may indicate:
- a TCI state (e.g. a "*joint TCI state"* for UL and DL transmissions), or
- an UL, to be used for UL transmissions, and an DL, to be used for DL transmissions, TCI state (in the present disclosure, also referred to as *"TCI state pair*").

The indication of a TCI state may be considered the indication of a beam, and the indication of a TCI state may be considered the indication of a pair of beams (i.e. an UL and an DL beam).

Details of the cell switch signalling and/or the cell switch command may be e.g. as specified in section 6.1.3.75 of TS 38.321 v18.0.0. It is noted that in general, a cell switch signalling may further include a timing advance command for the target cell, if available.

### First PUSCH/PUCCH transmission

The term *"first PUSCH transmission"* refers to the PUSCH transmission that is the first/ earliest PUSCH transmission (i.e. *"first"* when ordered in time the PUSCH transmission are ordered in time) among PUSCH transmissions that are:
- scheduled by an UL grant addressed to a RNTI of the communication device; and
- after completion of the RA procedure.

Thus, the first PUSCH transmissions is (i) scheduled by an UL grant addressed to a RNTI of the communication device and (ii) after completion of the RA procedure.

The term *"first PUCCH transmission"* refers to the PUCCH transmission that is the first/earliest PUCCH transmission (i.e. *"first"* when ordered in time the PUCCH transmission are ordered in time) among PUCCH transmissons that:
- carry an acknowledgment of reception; and
- after completion of the RA procedure.

Thus, the first PUCCH transmissions (i) acknowledges reception of a DL transmission and (ii) is after completion of the RA procedure.

### CBRA of 4-step type

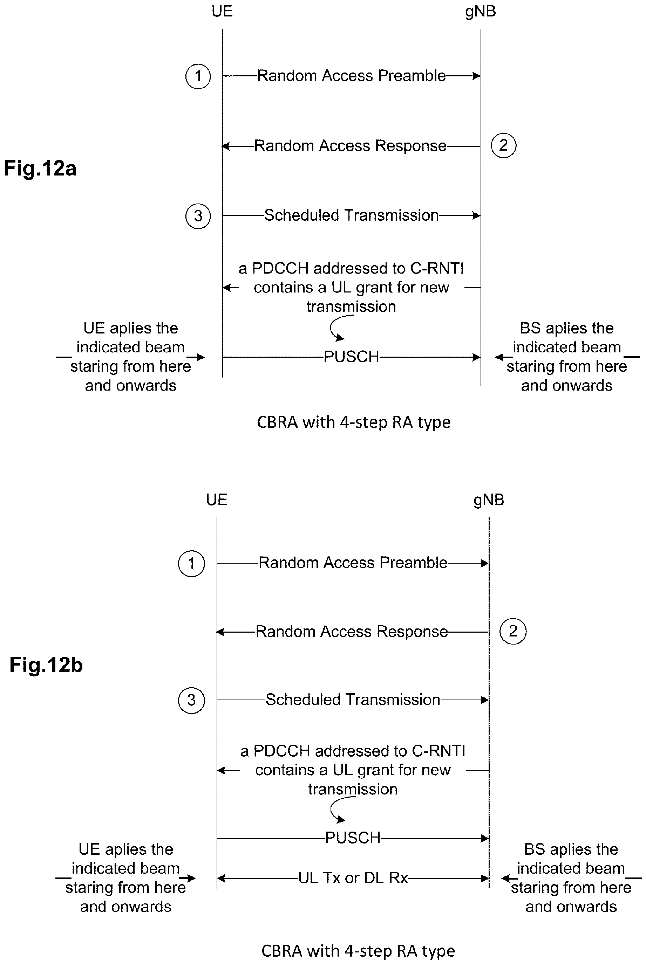

In general (e.g. in case of a CBRA of the 4-step type), the UE may transmit (and the BS receive), as part of the RA procedure (cf. also Fig. 5a, 12a and 12b):
- a first transmission (e.g. Msg1) comprising a random access preamble (e.g. a sequence code/Zadoff-Chu sequence), and
- a second RA transmission (e.g. Msg3) that is scheduled by the target cell BS and comprises an indication of the RNTI of the communication device (e.g. an indication of the Cell RNTI (C-RNTI of the communication device).

It is noted that the BS may schedules this second RA transmission with a transmission usually referred to as *"random access response"* (e.g. Msg2). The random access response is a transmission addressed to the RA-RNTI of the UE. Details of such a RA procedure have already been described above with reference to Fig. 5a.

In general, in case of such a RA procedure, the UE/BS start using the indicated TCI state (i) with the first PUSCH or (ii) with completion of the first PUSCH (i.e. with the first Tx/Rx after said first PUSCH). Thus, the UE and BS apply the indicated beam in the cell switch signalling starting from:
- the first PUSCH that is scheduled by a UL grant for a new transmission (i.e. said *"new transmission"* is not part of the RA procedure). This UL grant may be contained in a PDCCH addressed to C-RNTI that is received, by the UE, after the second RA transmission of the UE (Msg3). This PDCCH may be included in the "Contention Resolution step" (i.e. Msg4), i.e. in the last transmission of the BS of the Ra procedure (corresponding to solution A)), or
- the first transmission or reception after such a first PUSCH scheduled by a UL grant for a new transmission (corresponding to solution C)).

It is noted that, if the first PDCCH includes a DL assignment, the UE may wait for a PDCCH including an UL grant for a new PUSCH transmission to complete the RA procedure. In other words, if the first PDCCH includes a DL assginment, the UE may perform the reception the DL transmission scheduled by said first PDCCH using its current beam/TCI state (i.e. not apply the indicated TCI state). The UE thus waits for a PDCCH addressed to C-RNTI that schedules an UL grant and switches to the indicated TCI state with or with completion of the PUSCH scheduled by said UL grant. However, the present disclosure is not limited thereto. In general, the UE may also determine that the indicated TCI state is to be applied starting with (or with completion of) the first transmission scheduled be either (i) a PDCCH that includes a DL assignment or (ii) a PDCCH includes a UL grant, whichever PDCCH is received first.

In general, the UE and BS may continue using the indicated beam until a new beam is indicated. Details of determinations (in steps S1140 and S1155, respectively) of the TCI starting time in case of 4-step CBRA will now be described with reference to **Fig. 12a** and **12b****,** corresponding to solution A) and C), respectively.

As illustrated in Figs. 12b and 12b, after its second transmission of the RA procedure (step 3 *"scheduled transmission"* in the figures), the UE may receive DL control signalling from the BS. As further illustrated in Figs. 12b and 12b, this DL control signalling.
- contains an UL grant for a new transmission of the UE (this transmission being herein referred to as the first PUCCH);
- is addressed to the C-RNTI of the UE;
- is received after the second UE transmission of the RA procedure (e.g. after Msg3); and
- may be contained in a PDCCH.

As illustrated in **Fig. 12a**, the UE/BS (e.g. circuitry 835/885) may then determine that the TCI starting time is the beginning of the first PUSCH transmission, scheduled by this DL control signalling. In other words, the indicated TCI state is to be used starting with the first PUSCH transmission. Thus, the UE/BS use the indicated beam for the first PUSCH transmission (in Fig. 12a "PUSCH"), and for the following transmissions (until another beam switch is performed).

Once the first PDCCH addressed to the C-RNTI of the UE containing a UL grant for a new transmission is successfully decoded by the UE, the UE can assume that the random access is completed/was successful. Therefore, starting to apply the indicated beam with the PUSCH transmission, scheduled by the first PDCCH, may provide the earliest possibility to apply the indicated beam after the completion in case of 4-step CBRA.

However, beam switch delay may need to be considered between the scheduling grant by the PDCCH and the PUSCH transmission when the BS provides the grant. If the PDCCH is missed by the UE, the UE would continue using the old beam. However, BS may apply the new beam (i.e. indicated in the cell switch signalling) to schedule the PUSCH retransmission. In this case, misalignment may occur for some time. The misalignment will be resolved after a timer, e.g. *ra-ContentionResolutionTimer,* exprires and then UE can start Msg1 again.

As illustrated in **Fig. 12b****,** in other embodiments, the UE/BS (e.g. circuitry 835/885) determine that the TCI starting time is the beginning of the completion of the said first PUSCH transmission. In other words, the indicated TCI state is to be used beginning with completion of said first PUSCH transmission. Thus, the UE/BS do not use the indicated beam for the first PUSCH transmission, but use the indicated beam to (e.g. all/each) transmissions/receptions following the first PUSCH (until another beam switch is performed).

Starting to apply the indicated beam with completion of the first PUSCH transmission applies the indicated beam early and may avoid beam switching between a UL grant and the corresponding PUSCH (some UEs may not be able to handle too fast beam switching). In this case, if the PUSCH is missed by the BS, the BS would not apply the indicated beam. However, UE would apply the indicated beam after sending the PUSCH. In this case, misalignment may occur. To resolve this, in some embodiments the BS determines that the indicated beam is to be used:
- starting with completion of the first PUSCH transmissions, and
- to send PDCCH(s) for (re-)scheduling retransmission of this first PUSCH.

In other words, the BS may determine that the indicated beam is to be used starting with the scheduled completion of the first PUSCH transmission (i.e. wherein the scheduled completion refers to the time point at which the first PUSCH transmission should be completed according to the DL control signalling/UL grant scheduling said first PUSCH transmission).

### CFRA of 4-step type

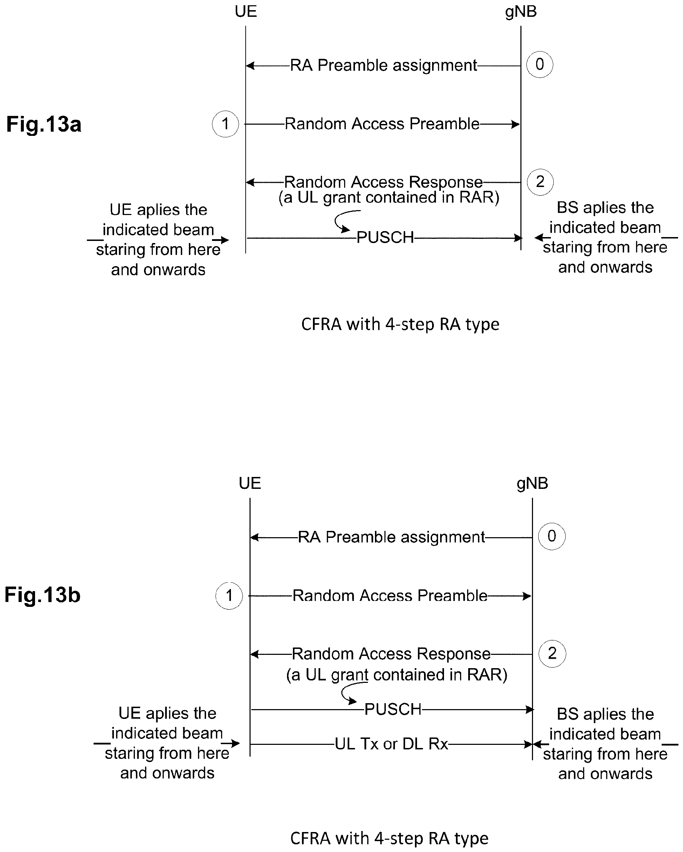

In general (e.g. in case of a CFRA of the 4-step type), as part of the RA procedure (cf. also Fig. 5b, 13a and 13b):
- the UE may transmit (and the BS receive) a first RA transmission (e.g. Msg1) comprising a random access preamble (e.g. a sequence code/Zadoff-Chu sequence), and
- the BS may transmit (and the UE receive) a second RA transmission, usually referred to as *"random access response (RAR)"* (e.g. Msg2). This random access response comprises (i) a random access response that is addressed to the RA-RNTI of the UE, and (ii) an UL grant for the first PUSCH transmission. This second RA transmission is transmitted/received after the above first RA transmission.

It is noted that, when receiving a RAR in case of CFRA and confirming that the RAR corresponds to random access preamble that UE has sent in Msg1, the UE can assume that RA procedure is completed (because no other completing UE, and hence no need for steps 3 and 4 in Fig 5a). Details of such a RA procedure have already been described above with reference to Fig. 5b.

In general, in case of such a RA procedure, the UE/BS start using the indicated TCI state (i) with the first PUSCH or (ii) with completion of the first PUSCH (i.e. with the first Tx/Rx after said first PUSCH). Thus, the UE and BS apply the indicated beam in the cell switch signalling starting from:
- the PUSCH that is that is scheduled by a UL grant contained in the Random Access Response (corresponding to solution A)), or
- the first transmission or reception after such a PUSCH that is that is scheduled by a UL grant contained in the Random Access Response(corresponding to solution C)).

In general, the UE and BS may continue using the indicated beam until a new beam is indicated. Details of the determination (in steps S1140 and S1155, respectively) of the TCI starting time in case of 4-step CFRA will now be described with reference to **Fig. 13a** and **13b****,** corresponding to solution A) and C), respectively.

As illustrated in Figs. 13a and 13b, after its first transmission of the RA procedure (step 1 *"Random Access Preamble"* in the figures), the UE receives the RAR from the BS. The RAR comprises an UL grant for the (first) PUSCH transmission of the UE after completion of the RA procedure.

As illustrated in **Fig. 13a****,** the UE/BS (e.g. circuitry 835/885) may then determine that the TCI starting time is the beginning of this first PUSCH transmission, scheduled by this UL grant in the RAR. In other words, the indicated TCI state is to be used starting with the first PUSCH transmission. Thus, the UE/BS use the indicated beam for the first PUSCH transmission (in Fig. 13a "PUSCH"), and for the following transmissions (until another beam switch is performed).

For CFRA with 4-step, once the RAR is successfully received by the UE, the UE can assume that the random access is completed/was successful. Therefore, starting to apply the indicated beam with the first PUSCH transmission, scheduled with the RAR, may provide the earliest possibility to apply the indicated beam after the completion in case of 4-step CFRA.

However, beam switch delay may need to be considered between scheduling grant in the RAR and the PUSCH transmission when the BS provides the grant. If the RAR is missed by the UE, the UE would continue using the old beam. However, BS would apply the new beam (i.e. indicated in the cell switch command) to schedule the PUSCH retransmission. In this case, misalignment may occur for some time. The misalignment will resolve after a timer, e.g., *ra-ReponseWindow,* expires and UE can start Msg1 again.

As illustrated in **Fig. 13b****,** in other embodiments, the UE/BS (e.g. circuitry 835/885) determines that the TCI starting time is the beginning of the completion of the said first PUSCH transmission. In other words, the indicated TCI state is to be used beginning with completion of said first PUSCH transmission. Thus, the UE/BS do not use the indicated beam for the first PUSCH transmission, but use the indicated beam to (e.g. all/each) transmissions/receptions following the first PUSCH (until another beam switch is performed).

Starting to apply the indicated beam with completion of the first PUSCH transmission applies the indicated beam early and may avoid beam switching between a UL grant and the corresponding PUSCH (some UEs may not be able to handle too fast beam switching). If the PUSCH is missed by the BS, the BS would not apply the indicated beam. However, UE would apply the indicated beam after sending the PUSCH. In this case, misalignment may occur. To resolve this, in some embodiments the BS determines that the indicated beam is to be used:
- starting with completion of the first PUSCH transmissions, and
- to send PDCCH(s) for (re-)scheduling retransmission of this first PUSCH.

In other words, the BS may determine that the indicated beam is to be used starting with the scheduled completion of the first PUSCH transmission (i.e. wherein the scheduled completion refers to the time point at which the first PUSCH transmission should be completed according to the DL control signalling/UL grant scheduling said first PUSCH transmission).

### CBRA/CFRA of 2-step type with C-RNTI in MsgA

In general (e.g. in case of a 2-step (type) CFRA or a 2-step (type) CBRA), as part of the RA procedure, the UE may transmit (and the BS receive) a first RA transmission (e.g. MsgA) comprising (cf. Figs. 5c and 5d)
- random access preamble (e.g. a sequence code/Zadoff-Chu sequence), and
- an indication of the C-RNTI of the UE.

Details of such a RA procedure have already been described above with reference to Fig. 5c and 5d.

In general, in accordance with the above-mentioned solutions A) to D), when the C-RNTI is included in MsgA (e.g. included in the first and only transmission of the RA procedure performed by the UE), the UE may receive, from the BS, DL control signalling (e.g. PDCCH) that is
- addressed to the C-RNTI of the UE, and
- schedules a DL or UL transmission.

It is noted that this DL signalling may be the first transmission the UE receives from the BS after its transmission of the above first (and possibly only) transmission of the RA procedure.

In general, after MsgA, the first PDCCH the UE receives could be a PDCCH to schedule: 1) a DL, 2) a UL for a new transmission or 3) a UL for retransmission of MsgA. In case of either 1) or 2), the RA procedure can be considered completed. However, in case of 3), UE needs to wait for either 1) or 2). Thus, in case of 1), the UE may apply one of solution B) and D); in case of 2), the UE may apply one of solution A) and C); and in case of 3), the UE may use its current TCI state for the retransmission of MsgA (PUSCH payload), and wait for the reception of a PDCCH not scheduling a retransmission of MsgA. If such PDCCH is received it either includes a DL assignment or an UL grant. If such PDCCH includes a DL assignment the UE then applies solution B) or D) and if such PDCCH includes a UL grant the UE then applies solution A) or C).

The DL control signalling is transmitted after the random access preamble, transmitted by the UE. The UE/BS (e.g. circuitry 835/885) may then determine (e.g. in S1140 and S1155 respectively) that the first transmission to which the indicated TCI state is to be applied is:
- the first PUSCH transmission (corresponding to solution A)),
- the first PUCCH transmission (corresponding to solution B)),
- the first Tx/Rx after the first PUSCH transmission (corresponding to solution C)), or
- the first Tx/Rx after the first PUCCH (corresponding to solution D)).

More specifically (regarding C) and D)), if the next/first transmission after the first PUCCH/PUSCH is an UL transmission transmitted by the UE, said UL transmission is the first transmission to which the indicated TCI state is applied, if the next/first transmission after the first PUCCH/PUSCH is an DL transmission received by the UE, said DL transmission is the first transmission to which the indicated TCI state is applied (if the TCI state indicates a pair of TCI states the DL TCI state is applied).

In general, in particular for 2-step CBRA and 2-step CFRA, any one of the PUSCH-based options A) and C) may be combined with any one of the PUCCH-solution B) and D). For instance:
- if the next PDCCH after MsgA schedules a UL transmission, solution A) or solution C) may be applied; and
- if the next PDCCH after MsgA schedules a DL transmission, solution B) or solution D) may be applied.

In other words, whether the first PUCCH or the first PUSCH is relevant for the determination of the TCI starting time may depend on whether the next DL signalling schedules a UL or a DL transmission.

Details of the solutions A) to D) in case of 2-step CBRA/CFRA when MsgA includes the C-RNTI are described below.

### CBRA/CFRA of 2-step type with C-RNTI in MsgA and PDCCH indicating DL transmission

As mentioned above, e.g. in case of a CBRA/CFRA of the 2-step type, when the first (and potentially only) RA transmission (MsgA) of the UE includes C-RNTI, the UE may receive (and the BS transmit) a DL control signalling (e.g. PDCCH) after MsgA that is
- addressed to the C-RNTI of the UE, and
- schedules a DL transmission.

The DL transmission can carry TA information (e.g. Absolute Timing Advance Command MAC CE). The UE may then receive the DL transmission (e.g. PDSCH), scheduled by the DL control signalling. It is noted that it be interpreted that this PDCCH and PDSCH are included in step B, shown in Fig. 5c and 5d. In other words, the transmission scheduling the DL transmission and/or the DL transmission may or may not be part of the RA procedure.

The UE then transmits, in response to the reception of the DL transmission, a transmission that acknowledges reception of the DL transmission. In other words, the first PUCCH transmission of the UE may carry an acknowledgment of reception of the DL transmission. UE and BS may then apply the indicated beam in the cell switch signalling starting from:
- said first PUCCH that carries an acknowledgment of reception (e.g. a HARQ-ACK) in response to the DL transmission scheduled by the PDCCH (corresponding to solution B)), or
- the first transmission or reception after said first PUCCH in response to said DL transmission (corresponding to solution D)).

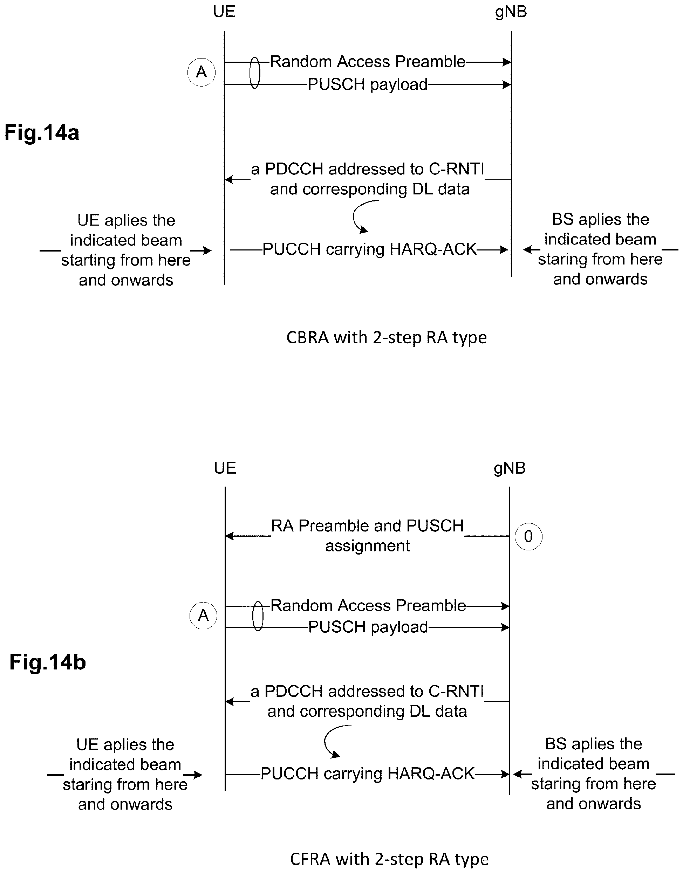

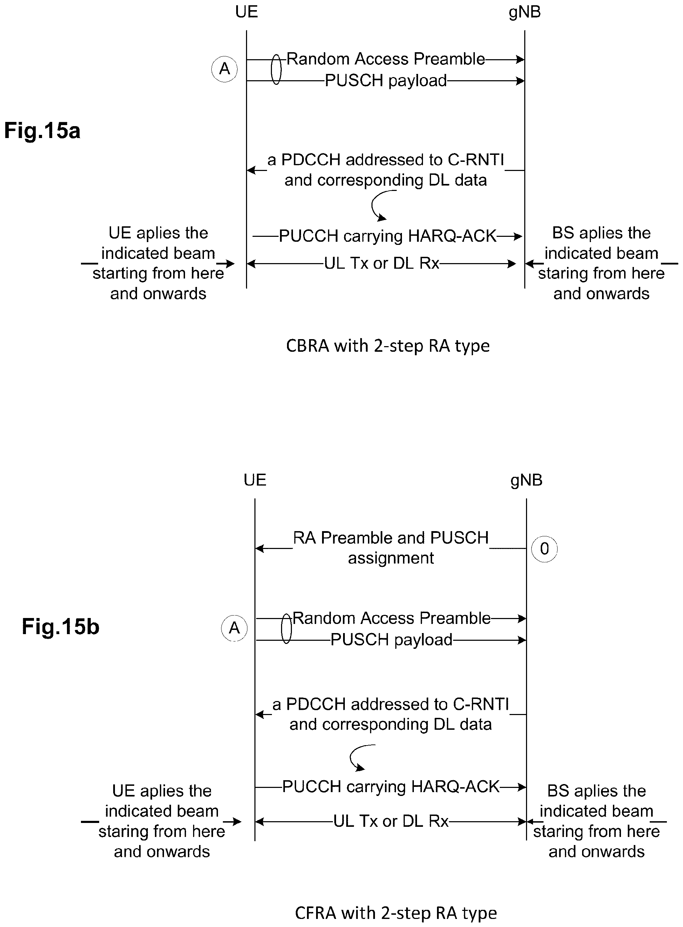

In general, the UE and BS may continue using the indicated beam until a new beam is indicated. Details of the determination (in steps S1140 and S1155, respectively) of the TCI starting time based on a PUCCH transmission in case of 2-step CBRA/CFRA will now be described with reference to Fig. 14a, 14b, 15a, and 15b. More specifically, **Fig. 14a** and **14b** show a determination that the TCI starting time is the (beginning of the) first PUCCH transmission for CBRA and CFRA, respectively. **Fig. 15a** and **15b** show a determination that the TCI starting time is the (completion/end of the) first PUCCH transmission for CBRA and CFRA, respectively.

As shown in Figs. **14a** and **14b** (both corresponding to solution B), the first transmission (e.g. MsgA) of the RA procedure of the UE may comprise a random access preamble and a PUSCH payload (step A in Figs. 14a and 14b). After this transmission, the UE may receive (i) a downlink control (DL) signalling (e.g. a "PDCCH" as illustrated in Fig. 14a and 14b), scheduling a DL transmission, and (ii) said scheduled transmission ("corresponding DL data" in Fig. 14a and 14b). It is noted that in contrast to the illustration in Fig. 14a and 14b, the DL signalling and the corresponding DL transmission may be different/separate transmissions. In response to the reception of the scheduled transmission.

The UE then transmits, using the indicated TCI state/beam, a transmissions that carries an acknowledgment of receipt/reception to the BS. More specifically, the acknowledgment of reception acknowledges to the BS that the UE has received the DL transmissions scheduled by the DL signalling (e.g. a PUSCH carrying a HARQ-ACK as in Fig. 14a and 14b). Since the DL signalling may be the first transmission the UE receives from the BS after its transmission of the first transmission of the RA procedure, this transmissions of the UE is in general the first (i.e. earliest) PUCCH transmission after the RA procedure.

The TCI starting time is thus the first PUCCH transmission. In other words, the UE/BS determine that the TCI state, indicated in the cell switch signalling, is to be applied starting with the first PUCCH transmission.

After the UE successfully decodes the PDCCH and the scheduled transport block, the UE can assume that the RA is completed/was successful. Starting to apply the indicated beam with the first PUCCH that carries a HARQ-ACK may be the earliest possible time after the completion of the RA procedure. However, UE beam switching may occur between receiving PDCCH/PDSCH and transmitting PUCCH. If the PDCCH or PDSCH is missed by UE, UE would still use the old beam. However, BS might apply the indicated beam to reschedule PDSCH. Such misalignment may be resolved once a timer, such as *msgB-Response Window* expires.

As shown in **Figs. 15a** and **15b** (both corresponding to solution D)), the first transmission (e.g. MsgA) of the RA procedure of the UE may comprise a random access preamble and a PUSCH payload (step A in Figs. 15a and 15b). After this transmission, the UE may receive (i) a DL signalling (e.g. a "PDCCH" as illustrated in Fig. 15a and 15b), scheduling a DL transmission, and (ii) said scheduled transmission ("corresponding DL data" in Fig. 15a and 15b). It is noted that in contrast to the illustration in Fig. 15a, the DL signalling and the corresponding DL transmission may be different/separate transmissions.

In response to the reception of the scheduled transmission, the UE then transmits a transmission that carries an acknowledgment of receipt/reception to the BS. More specifically, the acknowledgment of reception acknowledges to the BS that the UE has received the DL transmissions scheduled by the DL signalling (e.g. a PUSCH carrying a HARQ-ACK as in Fig. 15a and 15b). The UE does not apply the indicated beam to this transmission (but e.g. uses the current beam/beam used for/during the RA procedure). Since the DL signalling may be the first transmission the UE receives from the BS after its transmission of the first transmission of the RA procedure, this transmissions of the UE is in general the first (i.e. earliest) PUCCH transmission after the RA procedure.

The UE applies the indicated beam immediately after the completion of the ACK transmission. In other words, the TCI starting time is thus the completion of the first PUCCH transmission. In other words, the UE/BS determine that the TCI state, indicated in the cell switch signalling, is to be applied starting with the completion of the first PUCCH transmission.

Starting to apply the indicated beam with completion of the first PUCCH transmission that carries a HARQ-ACK transmission applies the indicated beam early and may avoid beam switching between DL data reception and corresponding HARQ-ACK transmission (some UEs may not be able to handle too fast beam switching). The PUCCH with HARQ-ACK can act as an acknowledgement for application of the indicated beam. Since the chance to miss HARQ-ACK is very low, if BS does not receive it, the BS can assume the previous PDCCH/PDSCH is missed by UE. Then BS will not switch to the indicated beam. Hence, beam misalignment during re-attempt of MsgB can be avoided.

### CBRA/CFRA of 2-step type with C-RNTI in MsgA and PDCCH indicating UL transmission

As mentioned above, e.g. in case of a CBRA/CFRA of the 2-step type, when the first (and potentially only) RA transmission (MsgA) of the UE includes C-RNTI, the UE may receive (and the BS transmit) a DL control signalling (e.g. PDCCH) after MsgA that is
- addressed to the C-RNTI of the UE, and
- schedules a new UL transmission (i.e. an UL grant).

It is noted that it be interpreted that this PDCCH is included in step B, shown in Fig. 5c and 5d. In other words, the transmission scheduling the UL transmission may or may not be part of the RA procedure.

The UE may then apply the beam indicated in the cell switch signalling starting with:
- the (first) PUSCH that is scheduled by the UL grant (corresponding to solution A)), or
- the first transmission or reception after such a (first) PUSCH that is scheduled by a UL grant (corresponding to solution C)).

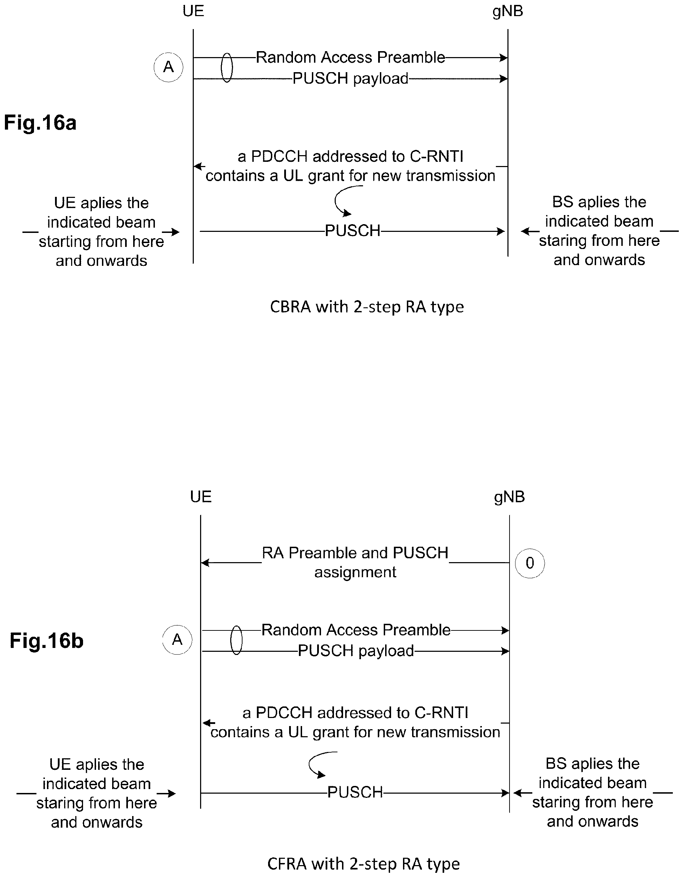

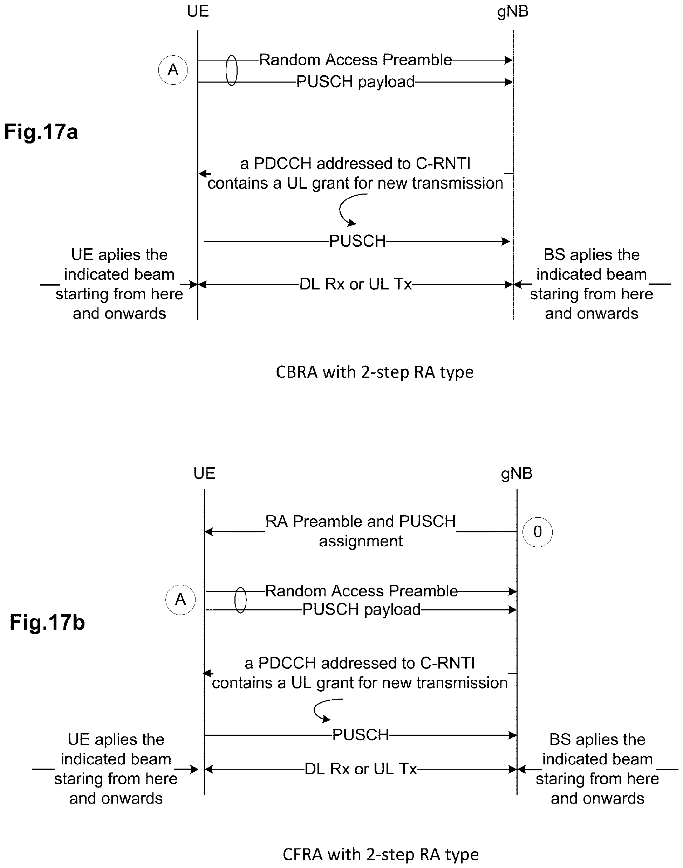

In general, the UE and BS may continue using the indicated beam until a new beam is indicated. Details of the determination (in steps S1140 and S1155, respectively) of the TCI starting time in case of 2-step CBRA/CFRA based on a PUSCH transmission will now be described with reference to Fig. 16a, 16b, 17a, and 17b. More specifically, **Fig. 16a** and **16b** show a determination that the TCI starting time is the (beginning of the) first PUSCH transmission for CBRA and CFRA, respectively. **Fig. 17a** and **17b** show a determination that the TCI starting time is the (completion/end of the) first PUSCH transmission for CBRA and CFRA, respectively.

As shown in **Figs. 16a** and **16b** (both corresponding to solution A)), the first transmission (e.g. Msg A) of the RA procedure of the UE may comprise a random access preamble and a PUSCH payload (step A in Figs. 16a and 16b). After this transmission, the UE may receive a DL signalling (e.g. a "PDCCH" as illustrated in Fig. 16a and 16b) scheduling a new UL transmission and/or including an UL grant. This DL signalling may be the first transmission the UE receives from the BS, after its transmission of the first transmission of the RA procedure. In particular, the DL signalling schedules the first PUSCH transmission.

The UE then transmits, using the indicated TCI state/beam the first PUSCH transmission. The TCI starting time is thus the first PUCCH transmission. In other words, the UE/BS determine that the TCI state, indicated in the cell switch signalling, is to be applied starting with the first PUCCH transmission.

After UE successfully decodes the PDCCH that contains a UL grant for a new transmission, UE can assume that RA procedure is completed (successfully). Starting to apply the indicated beam with the first PUSCH may be the earliest possible time after the completion of the RA procedure. However, UE beam switching may occur between receiving PDCCH and transmitting PUSCH. If the PDCCH is missed by UE, UE would still use the old beam. However, BS might apply the indicated beam to reschedule PUSCH. Such misalignment may be resolved once a timer, such as *msg8-ResponseWindow* expires.

As shown in **Figs. 17a** and **17b** (both corresponding to solution C)), the first transmission (e.g. MsgA) of the RA procedure of the UE may comprise a random access preamble and a PUSCH payload (step A in Figs. 17a and 17b). After this transmission, the UE may receive DL signalling (e.g. a "PDCCH" as illustrated in Fig. 17a and 17b), scheduling a UL transmission and/or including an UL grant. This DL signalling may be the first transmission the UE receives from the BS, after its transmission of the first transmission of the RA procedure. In particular, the DL signalling schedules the first PUSCH transmission.

The UE then transmits said first PUSCH transmission. The UE does not apply the indicated beam to this transmission (but e.g. uses the current beam/beam used for/during the RA procedure).

The UE applies the indicated beam immediately after the completion of the PUSCH transmission. In other words, the TCI starting time is thus the completion of the first PUSCH transmission. In other words, the UE/BS determine that the TCI state, indicated in the cell switch signalling, is to be applied starting with the completion of the first PUSCH transmission.

Starting to apply the indicated beam with completion of the first PUSCH applies the indicated beam early and may avoid beam switching between the UL grant and the PUSCH (some UEs may not be able to handle too fast beam switching). If the PUSCH is missed by the BS, the BS would not apply the indicated beam. However, from UE side RA is completed. Therefore, UE would apply the indicated beam after sending the PUSCH. In this case, misalignment may occur. To resolve this, in some embodiments the BS determines that the indicated beam is to be used:
- starting with completion of the first PUSCH transmissions, and
- to send PDCCH(s) for (re-)scheduling retransmission of this first PUSCH.

In other words, the BS may determine that the indicated beam is to be used starting with the scheduled completion of the first PUSCH transmission (i.e. wherein the scheduled completion refers to the time point at which the first PUSCH transmission should be completed according to the DL control signalling/UL grant scheduling said first PUSCH transmission).

### MSGA - without C-RNTI

In general, in case of a 2-step CBRA, when the C-RNTI is not included in the first UE transmission of the RA procedure (e.g. MsgA):
- The 2-step CBRA may fall back to 4-step CBRA. In this case, the above-described solutions for 4-step CBRA may be applied/used.
- the 2-step CFRA may fall back to 4-step CFRA. In this case, the above-described solutions for 4-step CBFA may be applied/used.

More specifically, as described above, when MsgA does not include C-RNTI, the RAR of the BS would be addressed to the MsgB-RNTI, and inside the RAR (which is a fallback RAR), UE will get an UL grant as in the respective 4-step case. The UE may thus monitor the PDCCH addressed to MsgB-RNTI (in step B of Figs. 5c and 5d), and/or the UE may receive a Fallback RAR as MSGB to indicate the UE to fall back to a corresponding 4-step RA procedure.

### Combination of solutions

A processing time, in the present disclosure referred to as *"Tproc",* may be defined for beam switching. Tproc can be defined different for beam switching between a grant and a PUSCH, and between a DL PDSCH reception and a corresponding HARQ-ACK transmission. Tproc is predetermined and may be (pre-)defined in a standard, or can depend on UE capability (i.e. may be determined based on capabilities of the respective UE e.g. in the source cell). Tproc specifies or corresponds to a predetermined time period/time duration, i.e. a time length. Tproc may for instance be a value that specifies a time duration in terms of milliseconds, number of symbols, or number of slots. Tproc is essentially an estimate for the time the/a UE requires for performing a switch of the used TCI state(s).

In case of a cell switch in which the source cell is operated by a different BS than the target cell, the BS of the target cell may be informed by the BS of the source cell of the value of Tproc of the cell-switching UE.

Using the processing time Tproc, solution A) may be combined with solution C) as follows:
- If the (length of the) time interval between (i) the (reception of the) UL grant scheduling the first PUSCH and (ii) the (transmission of the) first PUSCH, is shorter than or equal to Tproc, the UE will not apply the indicated TCI state/beam for the transmission of the first PUSCH (i.e. solution C) applies). In other words, if the indicated TCI state is different than the TCI state/beam used by the UE for MSG1 or MSGA, the indicated beam will be applied to the next channels/signals that follows up in time.
- If said time interval is longer than Tproc, the UE will apply the indicated TCI state/beam for the transmission of the first PUSCH (i.e. solution A) applies).

The length of said time interval between the UL grant scheduling the first PUSCH and the first PUSCH may for instance be measured from the last symbol of the UL grant to the first slot of the first PUSCH. It is further noted that if Tproc is equal to said time interval, in some embodiments, solution A) is applied rather than solution C).

Using the processing time Tproc, solution B) may be combined with solution D) as follows:
- If the (length of the) time interval between (i) the mentioned DL reception and the corresponding HARQ-ACK transmission, is shorter than or equal to Tproc, the UE will not apply the indicated TCI state/beam for the transmission of the first PUCCH, carrying said HARQ-ACK transmission (i.e. solution D) applies). In other words, if the indicated TCI state/beam is different than the TCI state/beam used by UE for MSG1 or MSGA, the indicated TCI state/beam will be applied to the next channels/signals that follows up in time.
- If said time interval is longer than Tproc, the UE will apply the indicated TCI state/beam for the transmission of the first PUCCH, carrying said HARQ-ACK transmission (i.e. solution B) applies).

The length of said time interval between the UL grant scheduling the first PUSCH and the first PUSCH may for instance be measured from the last symbol of the UL grant to the first slot of the first PUSCH. It is further noted that if Tproc is equal to said time interval, in some embodiments, solution A) is applied rather than solution C).

### Further Variants and/or Details, including Hardware and Software Implementation of the present disclosure

*In the following, variants and*/*or details of the present disclosure are described.*

### Control Signals

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### Terminology

In the present disclosure, UEs, base stations, and procedures are described for the new radio access technology envisioned for the 5G mobile communication systems, but which may also be used in LTE mobile communication systems or future mobile communication systems. Different implementations and variants are explained as well. The disclosure was facilitated by the discussions and findings as described herein and may for example be based at least on part thereof.

In general, it should be noted that many assumptions have been made herein so as to be able to explain the principles underlying the present disclosure in a clear, concise and understandable manner. These assumptions are however to be understood as merely examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure. In particular:

### User Equipment

A ***terminal*** or ***user terminal*** or ***user device*** or ***mobile station*** or ***mobile node*** or ***mobile device*** is referred to in the LTE and NR as a ***user equipment (UE).*** This may be a mobile device or communication apparatus/device such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes. Accordingly, unless context indicates otherwise, the terms *"(user) terminal", "user device", "user equipment (UE)", "mobile station*/*node*/*device", "en6",* and the like are used interchangeably.

### Base Station

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

A base station may be a ***scheduling node*** or ***network node,*** e.g. forming a part of the network for providing services to terminals. In particular, a base station may provide wireless access to terminals. Communication between the communication device (e.g. UE or terminal) and the scheduling device (e.g. base station) is typically standardized and may be defined by different layers, such as PHY, MAC, RRC etc. (see also the above discussion). In LTE and NR, the wireless interface protocol stack includes physical layer, medium access layer (MAC) and higher layers. In control plane, higher-layer protocol Radio Resource Control protocol is provided. Via RRC, the base station can control configuration of the terminals and terminals may communicate with the base station to perform control tasks such as connection and bearer establishment, modification, or the like, measurements, and other functions. The terminology used in LTE is eNB (or eNodeB), while the currently used terminology for 5G NR is gNB. The term *"base station"* or *"radio base station"* here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. In particular, the base station may also be gNB in a Non-Terrestrial Network (NTN) NR system. Accordingly, unless context indicates otherwise, the terms *"base station", "scheduling node", "network node", "gn8", "en6", "scheduling device",* and the like are used interchangeably.

### Uplink/Downlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Data Channels/Control Channels

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### Reference Signals

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### Time Intervals

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### Numerology

In general (like in the new radio system 5G-NR), for each numerology and carrier a resource grid of subcarriers and OFDM symbols may be defined respectively for uplink and downlink. Each element in the resource grid is called a resource element (RE) and is identified based on the frequency index in the frequency domain and the symbol position in the time domain (see e.g. 3GPP TS 38.211 v15.6.0 or e.g. v16.2.0, section 4). In other words, the term "resource element" can be used to denote a minimum resource unit being composed of one subcarrier for the length of one OFDM/SC-FDMA symbol.

For instance, downlink and uplink transmissions may be organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

Comparing to LTE numerology (subcarrier spacing and symbol length), NR supports multiple different types of subcarrier spacing, labeled by a parameter *µ* (in LTE there is only a 15 kHz subcarrier spacing, corresponding to *µ* = 0 in NR). The types NR numerology is summarized in 3GPP TS 38.211, v 15.7.0.

The OFDM numerology (e.g. subcarrier spacing, OFDM symbol duration, cyclic prefix (CP) duration, number of symbols per scheduling interval) that is suitable for one use case might not work well for another. For example, subcarrier spacing of 15kHz, 30kHz, 60 kHz... may be considered.

### Frequency Bands

The present disclosure may be applied to any of a licensed band and an unlicensed band.

### Communication

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### Antenna Ports

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Further Aspects

According to a first aspect, a communication device is provided. The communication device comprises a transceiver and circuitry. The transceiver, in operation, (i) receives control signalling; (ii) transmits one or more transmissions of a random-access (RA) procedure; (iii) receives one or more transmissions of the RA procedure; and (iv) transmits (a) a first Physical Uplink Shared Channel (PUSCH) transmission, or (b) a first Physical Uplink Control Channel (PUCCH) transmission. The first PUSCH transmission is a first transmission among PUSCH transmissions that are after completion of the RA procedure and scheduled by an Uplink (UL) grant addressed to a Radio Network Temporary Identifier (RNTI) of the communication device.. The first PUCCH transmission acknowledges reception of a downlink (DL) transmission, wherein the first PUCCH transmission is a first transmission among PUCCH transmissions that are after completion of the RA procedure and carry an acknowledgment of reception. The circuitry, in operation, (i) obtains, from the control signalling: (a) a cell switch command indicating that a cell switch from a source cell to a target cell is to be performed by the communication device, and (b) an indication indicating a Transmission Configuration Indication (TCI) state; (ii) performs, in accordance with the cell switch command, the cell switch to the target cell; (iii) performs the RA procedure in the target cell; and (iv) determines that the indicated TCI state is to be used starting with or with completion of (a) the first PUSCH transmission, or (b) the first PUCCH transmission.

According to a second aspect provided in addition to the first aspect, the circuitry, in operation, determines, in the determining: (i) if the indicated TCI state is an UL TCI state to be used for UL transmissions and the indication indicating the TCI state further indicates a DL TCI state to be used for DL transmissions, that the indicated UL and DL TCI states are respectively to be used for UL and DL transmissions starting with or with completion of: (a) the first PUSCH transmission, or (b) the first PUCCH transmission; or (ii) if the indicated TCI state is a TCI state to be used for both UL transmissions and DL transmissions, that the indicated TCI state is to be used for UL and DL transmissions starting with or with completion of (a) the first PUSCH transmission, or (b) the first PUCCH transmission.

According to a third aspect provided in addition to the first or the second aspect: (i) the circuitry, in operation, determines (a), if a predetermined time period is shorter than or equal to a time period between the UL grant and the first PUSCH transmission, that the indicated TCI state is to be used starting with the first PUSCH transmission, and (b), if the predetermined time period is greater than the time period between the UL grant and the first PUSCH transmission, that the indicated TCI state is to be used starting with completion of the first PUSCH transmission; or (ii) the circuitry, in operation, determines (a) if a predetermined time period is shorter than or equal to a time period between a reception of the DL transmission and the first PUCCH transmission, that the indicated TCI state is to be used starting with the first PUCCH transmission, and (b) if the predetermined time period is greater than the time period between the reception of the DL transmission and the first PUCCH transmission, that the indicated TCI state is to be used starting with completion of the first PUCCH transmission.

According to a fourth aspect provided in addition to any one of the first to the third aspect, the one or more transmitted transmissions of the RA procedure include (i) a first RA transmission comprising a random access preamble, and (ii) a second RA transmission which is a scheduled transmission comprising an indication of the RNTI, wherein the RNTI is a Cell RNTI (C-RNTI). The transceiver, in operation: (i) transmits, the first and the second RA transmission, (ii) receives, after transmitting the second RA transmission, DL control signalling that is addressed to the RNTI and schedules the first PUSCH transmission, (iii) transmits the first PUSCH transmission. The circuitry, in operation: (i) determines that the indicated TCI state is to be used beginning with the first PUSCH transmission, or (ii) determines that the indicated TCI state is to be used beginning with completion of the first PUSCH transmission.

According to a fifth aspect, provided in addition to any one of the first to the third aspect, the one or more transmitted transmissions of the RA procedure include a first RA transmission comprising a random access preamble. The one or more received transmissions of the RA procedure include a second RA transmission comprising (a) a random access response that is addressed to the RNTI and (b) an UL grant for the first PUSCH transmission, wherein the RNTI is a RA-RNTI. The transceiver, in operation: (i) transmits the first RA transmission, (ii) receives, after transmitting the first RA transmission, the second RA transmission, and (iii) transmits the first PUSCH transmission. The circuitry, in operation, obtains, from the second RA transmission, the UL grant for the first PUSCH transmission. Furthermore, the circuitry, in operation: (i) determines that the indicated TCI state is to be used for transmissions beginning with the first PUSCH transmission, or (ii) determines that the indicated TCI state is to be used for transmissions beginning with completion of the first PUSCH transmission.

According to a sixth aspect, provided in addition to any one of the first to the third aspect, the one or more transmitted transmissions of the RA procedure include a RA transmission comprising (a) a random access preamble and (b) an indication of the RNTI, wherein the RNTI is a cell Cell RNTI (C-RNTI); and the transceiver, in operation, transmits the RA transmission.

According to a seventh aspect provided in addition to the sixth aspect, the transceiver, in operation: (i) receives, after transmitting the RA transmission, DL control signalling that (a) is addressed to the RNTI, wherein the RNTI is a Cell RNTI, C-RNTI, and (b) schedules the first PUSCH transmission, and (ii) transmits, the first PUSCH transmission. The circuitry, in operation: (i) determines that the indicated TCI state is to be used beginning with the first PUSCH transmission, or (ii) determines that the indicated TCI state is to be used beginning with completion of the first PUSCH transmission.

According to an eighth aspect provided in addition to the sixth or the seventh aspect, the transceiver, in operation: (i) receives, after transmitting the RA transmission, DL control signalling that is (a) addressed to the RNTI and (b) schedules a DL transmission, wherein the RNTI is a Cell RNTI (C-RNTI), (ii) receives the DL transmission scheduled by the DL control signalling, and (iii) transmits, the first PUCCH transmission, wherein the first PUCCH transmission carries an acknowledgment of reception of the DL transmission. The circuitry, in operation: (i) determines that the indicated TCI state is to be used beginning with the first PUCCH transmission, or (ii) determines that the indicated TCI state is to be used beginning with completion of the first PUCCH transmission.

According to a ninth aspect a method for a communication device is provided. The method includes the steps of (i) receiving control signalling, (ii) obtaining, from the control signalling: (a) a cell switch command indicating that a cell switch from a source cell to a target cell is to be performed by the communication device, and (b) an indication indicating a Transmission Configuration Indication (TCI) state; (iii) performing, in accordance with the cell switch command, the cell switch to the target cell; (iv) performing a random-access (RA) procedure in the target cell, comprising: (a) transmitting one or more transmissions of the RA procedure, and (b) receiving one or more transmissions of the RA procedure; (v) determining that the indicated TCI state is to be used starting with or with completion of: (a) a first Physical Uplink Shared Channel (PUSCH) transmission, wherein the first PUSCH transmission is a first transmission among PUSCH transmissions that are after completion of the RA procedure and scheduled by an Uplink (UL) grant addressed to a Radio Network Temporary Identifier (RNTI) of the communication device, or (b) a first Physical Uplink Control Channel (PUCCH), transmission that acknowledges reception of a downlink (DL) transmission, wherein the first PUCCH transmission is a first transmission among PUCCH transmissions that are after completion of the RA procedure and carry an acknowledgment of reception; and (vi) transmitting: (a) the first PUSCH transmission, or (b) the first PUCCH transmission.

Further (dependent) aspects are provided for the method according to the ninth aspect, corresponding to the steps performed in operation by the communication device provided by any one of the second to the eighth aspects.

According to a tenth aspect, a base station operating a target cell is provided. The base station comprises circuitry and a transceiver. The circuitry, in operation: (i) determines that a communication device is to perform a cell switch from a source to the target cell in accordance with control signalling, transmitted to the communication device in the source cell, wherein the control signalling includes (a) cell switch command indicating that a cell switch from a source cell to the target cell is to be performed by the communication device, and (b) an indication indicating a Transmission Configuration Indication (TCI) state; (ii) performs, in the target cell, a random-access (RA) procedure with the communication device; (iii) determines that the indicated TCI state is to be used starting with or with completion of: (a) a first Physical Uplink Shared Channel (PUSCH) transmission, wherein the first PUSCH transmission is a first transmission among PUSCH transmissions of the communication device that are after completion of the RA procedure, performed in the target cell, and scheduled by an Uplink (UL) grant addressed to a Radio Network Temporary Identifier (RNTI) of the communication device, or (b) a first Physical Uplink Control Channel (PUCCH) transmission that is first among PUCCH transmissions of the communication device that are after completion of the RA procedure and carry an acknowledgment of reception. The transceiver, in operation: (i) transmits one or more transmissions of the RA procedure to the communication device; (ii) receives one or more transmissions of the RA procedure from the communication device; and (iii) receives from the communication device: (a) the first PUSCH transmission, or (b) the first PUCCH.

According to an eleventh aspect provided in addition to the tenth aspect, the circuitry, in operation, determines, in the determining: (i) if the indicated TCI state is an UL TCI state to be used for UL transmissions and the indication indicating the TCI state further indicates a DL TCI state to be used for DL transmissions, that the indicated UL and DL TCI states are respectively to be used for UL and DL transmissions starting with or with completion of: (a) the first PUSCH transmission, or (b) the first PUCCH transmission; or (ii) if the indicated TCI state is a TCI state to be used for both UL transmissions and DL transmissions, that the indicated TCI state is to be used for UL and DL transmissions starting with or with completion of (a) the first PUSCH transmission, or (b) the first PUCCH transmission.

According to a twelfth aspect provided in addition to the tenth or the eleventh aspect: (i) the circuitry, in operation, determines (a), if a predetermined time period is shorter than or equal to a time period between the UL grant and the first PUSCH transmission, the indicated TCI state is to be used starting with the first PUSCH transmission, and (b), if the predetermined time period is greater than the time period between the UL grant and the first PUSCH transmission, the indicated TCI state is to be used starting with completion of the first PUSCH transmission; or (ii) the circuitry, in operation, determines(a) if a predetermined time period is shorter than or equal to a time period between a reception of the DL transmission and the first PUCCH transmission, that the indicated TCI state is to be used starting with the first PUCCH transmission, and (b) if the predetermined time period is greater than the time period between the reception of the DL transmission and the first PUCCH transmission, that the indicated TCI state is to be used starting with completion of the first PUCCH transmission.

According to a thirteenth aspect provided in addition to any one of the tenth to the twelfth aspect, the one or more received transmissions of the RA procedure include (i) a first RA transmission comprising a random access preamble, and (ii) a second RA transmission which is a scheduled transmission comprising an indication of the RNTI, wherein the RNTI is a Cell RNTI (C-RNTI). The transceiver, in operation: (i) receives, the first and the second RA transmission, (ii) transmits, after receiving the second RA transmission, DL control signalling that is addressed to the RNTI and schedules the first PUSCH transmission, (iii) receives the first PUSCH transmission. The circuitry, in operation: (i) determines that the indicated TCI state is to be used beginning with the first PUSCH transmission, or (ii) determines that the indicated TCI state is to be used beginning with completion of the first PUSCH transmission.

According to a fourteenth aspect, provided in addition to any one of the tenth to the twelfth aspect, the one or more received transmissions of the RA procedure include a first RA transmission comprising a random access preamble. The one or more transmitted transmissions of the RA procedure include a second RA transmission comprising (a) a random access response that is addressed to the RNTI and (b) an UL grant for the first PUSCH transmission, wherein the RNTI is a RA-RNTI. The transceiver, in operation: (i) receives the first RA transmission, (ii) transmits, after receiving the first RA transmission, the second RA transmission, and (iii) receives the first PUSCH transmission. The circuitry, in operation, generates the second RA transmission including the UL grant for the first PUSCH transmission. Furthermore, the circuitry, in operation: (i) determines that the indicated TCI state is to be used for transmissions beginning with the first PUSCH transmission, or (ii) determines that the indicated TCI state is to be used for transmissions beginning with completion of the first PUSCH transmission.

According to a fifteenth aspect, provided in addition to any one of the tenth to the twelfth aspect, the one or more received transmissions of the RA procedure include a RA transmission comprising (a) a random access preamble and (b) an indication of the RNTI, wherein the RNTI is a cell Cell RNTI (C-RNTI); and the transceiver, in operation, receives the RA transmission.

According to a sixteenth aspect provided in addition to the fifteenth aspect, the transceiver, in operation: (i) transmits, after receiving the RA transmission, DL control signalling that (a) is addressed to the RNTI, wherein the RNTI is a Cell RNTI, C-RNTI, and (b) schedules the first PUSCH transmission, and (ii) receives, the first PUSCH transmission. The circuitry, in operation: (i) determines that the indicated TCI state is to be used beginning with the first PUSCH transmission, or (ii) determines that the indicated TCI state is to be used beginning with completion of the first PUSCH transmission.

According to an seventeenth aspect provided in addition to the fifteenth or the sixteenth aspect, the transceiver, in operation: (i) transmits, after receiving the RA transmission, DL control signalling that is (a) addressed to the RNTI and (b) schedules a DL transmission, wherein the RNTI is a Cell RNTI (C-RNTI), (ii) transmits the DL transmission scheduled by the DL control signalling, and (iii) receives, the first PUCCH transmission, wherein the first PUCCH transmission carries an acknowledgment of reception of the DL transmission. The circuitry, in operation: (i) determines that the indicated TCI state is to be used beginning with the first PUCCH transmission, or (ii) determines that the indicated TCI state is to be used beginning with completion of the first PUCCH transmission.

According to an eighteenth aspect, a method for a base station operating a target cell is provided. The method includes the steps of: (i) determining that a communication device is to perform a cell switch from a source cell to the target cell in accordance with control signalling, transmitted to the communication device in the source cell, wherein the control signalling includes (a) a cell switch command indicating that a cell switch from a source cell to the target cell is to be performed by the communication device, and (b) an indication indicating a Transmission Configuration Indication (TCI) state; (ii) performing, in the target cell, the random-access (RA) procedure with the communication device, comprising: (a) transmitting, in the target cell, one or more transmissions of the RA procedure to the communication device, (b) receiving, in the target cell, one or more transmissions of the RA procedure from the communication device; (iii) determining that the indicated TCI state is to be used starting with or with completion of (a) a first Physical Uplink Shared Channel (PUSCH) transmission, wherein the first PUSCH transmission is a first transmission among PUSCH transmissions of the communication device that are after completion of the RA procedure, performed in the target cell, and scheduled by an Uplink (UL) grant addressed to a Radio Network Temporary Identifier (RNTI) of the communication device, or (b) a first Physical Uplink Control Channel (PUCCH) transmission that is first among PUCCH transmissions of the communication device that are after completion of the RA procedure and carry an acknowledgment of reception; and (iv) receiving from the communication device (a) the first PUSCH transmission or (b) the first PUCCH transmission.

Further (dependent) aspects are provided for the method according to the eighteenth aspect, corresponding to the steps performed in operation by the base station, provided by any one of the eleventh to the seventeenth aspects.

According to a nineteenth aspect, an integrated circuit is provided (that may be deployed in a communication device, in particular user equipment). The integrated circuit, in operation, controls a process of a communication device, the process including the steps of: (i) receiving control signalling, (ii) obtaining, from the control signalling: (a) a cell switch command indicating that a cell switch from a source cell to a target cell is to be performed by the communication device, and (b) an indication indicating a Transmission Configuration Indication (TCI) state; (iii) performing, in accordance with the cell switch command, the cell switch to the target cell; (iv) performing a random-access (RA) procedure in the target cell, comprising: (a) transmitting one or more transmissions of the RA procedure, and (b) receiving one or more transmissions of the RA procedure; (v) determining that the indicated TCI state is to be used starting with or with completion of: (a) a first Physical Uplink Shared Channel (PUSCH) transmission, wherein the first PUSCH transmission is a first transmission among PUSCH transmissions that are after completion of the RA procedure and scheduled by an Uplink (UL) grant addressed to a Radio Network Temporary Identifier (RNTI) of the communication device, or (b) a first Physical Uplink Control Channel (PUCCH), transmission that acknowledges reception of a downlink (DL) transmission, wherein the first PUCCH transmission is a first transmission among PUCCH transmissions that are after completion of the RA procedure and carry an acknowledgment of reception; and (vi) transmitting: (a) the first PUSCH transmission, or (b) the first PUCCH transmission.

For instance, the integrated circuit according to the nineteenth aspect may comprise: an interface to a transceiver capable of receiving and transmitting signals; and circuitry configured (by hardware or software) to perform:
(i) configuring (or controlling), via said interface, the transceiver to receive control signalling;
(ii) obtaining (e.g. after receiving via said interface the control signalling from the transceiver), from the control signalling: (a) a cell switch command indicating that a cell switch from a source cell to a target cell is to be performed by the communication device, and (b) an indication indicating a TCI state;
(iii) performing, in accordance with the cell switch command, the cell switch to the target cell;
(iv) performing a RA procedure in the target cell, comprising configuring (or controlling), via said interface, the transceiver to: (a) transmitting one or more transmissions of the RA procedure, and (b) receiving one or more transmissions of the RA procedure;
(v) determining that the indicated TCI state is to be used starting with or with completion of the first PUSCH transmission or the first PUCCH, transmission that acknowledges reception of a DL transmission; and
(vi) configuring (or controlling), via said interface, the transceiver to transmit the first PUSCH transmission or the first PUCCH transmission.

The integrated circuit of the nineteenth aspect may further implement the corresponding features of any one of the second to the eighth aspects.

According to a twentieth aspect, an integrated circuit is provided (that may be deployed in a base station, in particular a gnB). The integrated circuit, in operation, controls a process of a base station operating a target cell, the process including the steps of (i) determining that a communication device is to perform a cell switch from a source cell to the target cell in accordance with control signalling, transmitted to the communication device in the source cell, wherein the control signalling includes (a) a cell switch command indicating that a cell switch from a source cell to the target cell is to be performed by the communication device, and (b) an indication indicating a Transmission Configuration Indication (TCI) state; (ii) performing, in the target cell, the random-access (RA) procedure with the communication device, comprising: (a) transmitting, in the target cell, one or more transmissions of the RA procedure to the communication device, (b) receiving, in the target cell, one or more transmissions of the RA procedure from the communication device; (iii) determining that the indicated TCI state is to be used starting with or with completion of (a) a first Physical Uplink Shared Channel (PUSCH) transmission, wherein the first PUSCH transmission is a first transmission among PUSCH transmissions of the communication device that are after completion of the RA procedure, performed in the target cell, and scheduled by an Uplink (UL) grant addressed to a Radio Network Temporary Identifier (RNTI) of the communication device, or (b) a first Physical Uplink Control Channel (PUCCH) transmission that is first among PUCCH transmissions of the communication device that are after completion of the RA procedure and carry an acknowledgment of reception; and (iv) receiving from the communication device (a) the first PUSCH transmission or (b) the first PUCCH transmission.

For instance, the integrated circuit according to the twentieth aspect may comprise: an interface to a transceiver capable of receiving and transmitting signals; and circuitry configured (by hardware or software) to perform:
(i) determining that a communication device is to perform a cell switch from a source cell to the target cell in accordance with the control signalling;
(ii) performing, in the target cell, the RA procedure with the communication device, comprising configuring (or controlling), via said interface, the transceiver to: (a) transmit, in the target cell, one or more transmissions of the RA procedure to the communication device, (b) receive, in the target cell, one or more transmissions of the RA procedure from the communication device;
(iii) determining that the indicated TCI state is to be used starting with or with completion of the first PUSCH transmission or the first PUCCH transmission; and
(iv) configuring (or controlling), via said interface, the transceiver to receive, from the communication device the first PUSCH transmission or the first PUCCH transmission.

The integrated circuit of the twentieth aspect may further implement the corresponding features of any one of the eleventh to the seventeenth aspects.

According to a twenty-first aspect, a program stored on a (non-transitory) storage medium and including code instructions, which, when executed on one or more processors of a communication device (in particular, user equipment or a base station), cause the one or more processors to execute the steps of any one of the above mentioned methods (the ninth and the eighteenth aspects and their respective further aspects) is provided.

Summarizing, the present disclosure relates to a communication device, a base station and respective methods for a communication device and a base station. For example, the communication device is a user equipment (UE) comprising a circuitry and a transceiver. The transceiver, in operation, (i) receives control signalling; (ii) transmits one or more transmissions of a random-access (RA) procedure; (iii) receives one or more transmissions of the RA procedure; and (iv) transmits (a) a first Physical Uplink Shared Channel (PUSCH) transmission, wherein the first PUSCH transmission is a first transmission among PUSCH transmissions that are after completion of the RA procedure and scheduled by an Uplink (UL) grant addressed to a Radio Network Temporary Identifier (RNTI) of the communication device, or (b) a first Physical Uplink Control Channel (PUCCH) transmission that acknowledges reception of a downlink (DL) transmission, wherein the first PUCCH transmission is a first transmission among PUCCH transmissions that are after completion of the RA procedure and carry an acknowledgment of reception. The circuitry, in operation, (i) obtains, from the control signalling: (a) a cell switch command indicating that a cell switch from a source cell to a target cell is to be performed by the communication device, and (b) an indication indicating a Transmission Configuration Indication (TCI) state; (ii) performs, in accordance with the cell switch command, the cell switch to the target cell; (iii) performs the RA procedure in the target cell; and (iv) determines that the indicated TCI state is to be used starting with or with completion of (a) the first PUSCH transmission, or (b) the first PUCCH transmission.

## Claims

1. A communication device comprising:
a transceiver which, in operation:
- receives control signalling,
- transmits one or more transmissions of a random-access, RA, procedure,
- receives one or more transmissions of the RA procedure, and
- transmits:
∘ a first Physical Uplink Shared Channel, PUSCH, transmission, wherein the first PUSCH transmission is a first transmission among PUSCH transmissions that are after completion of the RA procedure and scheduled by an Uplink, UL, grant addressed to a Radio Network Temporary Identifier, RNTI, of the communication device, or
∘ a first Physical Uplink Control Channel, PUCCH, transmission that acknowledges reception of a downlink, DL, transmission, wherein the first PUCCH transmission is a first transmission among PUCCH transmissions that are after completion of the RA procedure and carry an acknowledgment of reception; and
circuitry which, in operation:
- obtains, from the control signalling:
∘ a cell switch command indicating that a cell switch from a source cell to a target cell is to be performed by the communication device, and
∘ an indication indicating a Transmission Configuration Indication, TCI, state;
- performs, in accordance with the cell switch command, the cell switch to the target cell;
- performs the RA procedure in the target cell; and
- determines that the indicated TCI state is to be used starting with or with completion of:
∘ the first PUSCH transmission, or
∘ the first PUCCH transmission.

2. The communication device according to claim 1, wherein,
the circuitry, in operation, determines, in the determining:
- if the indicated TCI state is an UL TCI state to be used for UL transmissions and the indication indicating the TCI state further indicates a DL TCI state to be used for DL transmissions, that the indicated UL and DL TCI states are respectively to be used for UL and DL transmissions starting with or with completion of:
∘ the first PUSCH transmission, or
∘ the first PUCCH transmission; or
- if the indicated TCI state is a TCI state to be used for both UL transmissions and DL transmissions, that the indicated TCI state is to be used for UL and DL transmissions starting with or with completion of:
∘ the first PUSCH transmission, or
∘ the first PUCCH transmission.

3. The communication device according to claim 1 or 2, wherein
the circuitry, in operation, determines:
- if a predetermined time period is shorter than or equal to a time period between the UL grant and the first PUSCH transmission, that the indicated TCI state is to be used starting with the first PUSCH transmission, and,
- if the predetermined time period is greater than the time period between the UL grant and the first PUSCH transmission, that the indicated TCI state is to be used starting with completion of the first PUSCH transmission; or
the circuitry, in operation, determines:
- if a predetermined time period is shorter than or equal to a time period between a reception of the DL transmission and the first PUCCH transmission, that the indicated TCI state is to be used starting with the first PUCCH transmission, and
- if the predetermined time period is greater than the time period between the reception of the DL transmission and the first PUCCH transmission, that the indicated TCI state is to be used starting with completion of the first PUCCH transmission.

4. The communication device according to any one of claims 1 to 3, wherein
the one or more transmitted transmissions of the RA procedure include:
- a first RA transmission comprising a random access preamble, and
- a second RA transmission which is a scheduled transmission comprising an indication of the RNTI, wherein the RNTI is a Cell RNTI, C-RNTI;
the transceiver, in operation,
- transmits, the first and the second RA transmission,
- receives, after transmitting the second RA transmission, DL control signalling that is addressed to the RNTI and schedules the first PUSCH transmission,
- transmits the first PUSCH transmission;
the circuitry, in operation:
- determines that the indicated TCI state is to be used beginning with the first PUSCH transmission, or
- determines that the indicated TCI state is to be used beginning with completion of the first PUSCH transmission.

5. The communication device according to any one of claims 1 to 3, wherein
the one or more transmitted transmissions of the RA procedure include a first RA transmission comprising a random access preamble,
the one or more received transmissions of the RA procedure include a second RA transmission comprising a random access response that is addressed to the RNTI and an UL grant for the first PUSCH transmission, wherein the RNTI is a RA-RNTI;
the transceiver, in operation,
- transmits the first RA transmission,
- receives, after transmitting the first RA transmission, the second RA transmission, and
- transmits the first PUSCH transmission;
the circuitry, in operation, obtains, from the second RA transmission, the UL grant for the first PUSCH transmission, and
the circuitry, in operation:
- determines that the indicated TCI state is to be used for transmissions beginning with the first PUSCH transmission, or
- determines that the indicated TCI state is to be used for transmissions beginning with completion of the first PUSCH transmission.

6. The communication device according to any one of claims 1 to 3, wherein
the one or more transmitted transmissions of the RA procedure include a RA transmission comprising a random access preamble and an indication of the RNTI, wherein the RNTI is a Cell RNTI, C-RNTI; and
the transceiver, in operation, transmits the RA transmission.

7. The communication device according to claim 6, wherein
the transceiver, in operation:
- receives, after transmitting the RA transmission, DL control signalling that is addressed to the RNTI, wherein the RNTI is a Cell RNTI, C-RNTI, and schedules the first PUSCH transmission, and
- transmits, the first PUSCH transmission; and
the circuitry, in operation:
- determines that the indicated TCI state is to be used beginning with the first PUSCH transmission, or
- determines that the indicated TCI state is to be used beginning with completion of the first PUSCH transmission.

8. The communication device according to claim 6 or 7, wherein
the transceiver, in operation:
- receives, after transmitting the RA transmission, DL control signalling that is addressed to the RNTI and schedules a DL transmission, wherein the RNTI is a Cell RNTI, C-RNTI,
- receives the DL transmission scheduled by the DL control signalling, and
- transmits, the first PUCCH transmission, wherein the first PUCCH transmission carries an acknowledgment of reception of the DL transmission; and
the circuitry, in operation:
- determines that the indicated TCI state is to be used beginning with the first PUCCH transmission, or
- determines that the indicated TCI state is to be used beginning with completion of the first PUCCH transmission.

9. A method for a communication device, the method including the steps of:
receiving control signalling,
obtaining, from the control signalling:
- a cell switch command indicating that a cell switch from a source cell to a target cell is to be performed by the communication device, and
- an indication indicating a Transmission Configuration Indication, TCI, state;
performing, in accordance with the cell switch command, the cell switch to the target cell;
performing a random-access, RA, procedure in the target cell, comprising:
- transmitting one or more transmissions of the RA procedure, and
- receiving one or more transmissions of the RA procedure;
determining that the indicated TCI state is to be used starting with or with completion of:
- a first Physical Uplink Shared Channel, PUSCH, transmission, wherein the first PUSCH transmission is a first transmission among PUSCH transmissions that are after completion of the RA procedure and scheduled by an Uplink, UL, grant addressed to a Radio Network Temporary Identifier, RNTI, of the communication device, or
- a first Physical Uplink Control Channel, PUCCH, transmission that acknowledges reception of a downlink, DL, transmission, wherein the first PUCCH transmission is a first transmission among PUCCH transmissions that are after completion of the RA procedure and carry an acknowledgment of reception; and
transmitting:
- the first PUSCH transmission, or
- the first PUCCH transmission.

10. A base station operating a target cell, comprising:
circuitry which, in operation:
- determines that a communication device is to perform a cell switch from a source to the target cell in accordance with control signalling, transmitted to the communication device in the source cell, wherein the control signalling includes:
∘ a cell switch command indicating that a cell switch from a source cell to the target cell is to be performed by the communication device, and
∘ an indication indicating a Transmission Configuration Indication, TCI, state;
- performs, in the target cell, a random-access, RA, procedure with the communication device;
- determines that the indicated TCI state is to be used starting with or with completion of:
∘ a first Physical Uplink Shared Channel, PUSCH, transmission, wherein the first PUSCH transmission is a first transmission among PUSCH transmissions of the communication device that are after completion of the RA procedure, performed in the target cell, and scheduled by an Uplink, UL, grant addressed to a Radio Network Temporary Identifier, RNTI, of the communication device, or
∘ a first Physical Uplink Control Channel, PUCCH, transmission that is first among PUCCH transmissions of the communication device that are after completion of the RA procedure and carry an acknowledgment of reception; and
a transceiver which, in operation:
- transmits one or more transmissions of the RA procedure to the communication device,
- receives one or more transmissions of the RA procedure from the communication device, and
- receives from the communication device:
∘ the first PUSCH transmission, or
∘ the first PUCCH.

11. A method for a base station operating a target cell, the method including the steps of:
determining that a communication device is to perform a cell switch from a source cell to the target cell in accordance with control signalling, transmitted to the communication device in the source cell, wherein the control signalling includes:
- a cell switch command indicating that a cell switch from a source cell to the target cell is to be performed by the communication device, and
- an indication indicating a Transmission Configuration Indication, TCI, state;
performing, in the target cell, the random-access, RA, procedure with the communication device, comprising:
- transmitting, in the target cell, one or more transmissions of the RA procedure to the communication device,
- receiving, in the target cell, one or more transmissions of the RA procedure from the communication device;
determining that the indicated TCI state is to be used starting with or with completion of:
- a first Physical Uplink Shared Channel, PUSCH, transmission, wherein the first PUSCH transmission is a first transmission among PUSCH transmissions of the communication device that are after completion of the RA procedure, performed in the target cell, and scheduled by an Uplink, UL, grant addressed to a Radio Network Temporary Identifier, RNTI, of the communication device, or
- a first Physical Uplink Control Channel, PUCCH, transmission that is first among PUCCH transmissions of the communication device that are after completion of the RA procedure and carry an acknowledgment of reception; and
receiving from the communication device:
- the first PUSCH transmission, or
- the first PUCCH transmission.
